# EUROPEAN PATENT APPLICATION

(11) **EP 4 804 608 A1**
(43) Date of publication of application: **09.09.2026**
(21) Application number: 24884555.4
(22) Date of filing: 24.10.2024
(51) Int. Cl.: H04W 28/06

(54) **PROCESSING METHOD, PROCESSING APPARATUS, COMMUNICATION DEVICE AND READABLE STORAGE MEDIUM**

(30) Priority: 31.10.2023 CN 202311432468; 08.05.2024 CN 202410563986
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Conti, Marco
(86) International application number: PCT/CN2024/126987
(87) International publication number: WO 2025/092551

(57) **Abstract**

This application discloses a processing method, a processing apparatus, a communication device, and a readable storage medium, belonging to the technical field of wireless communication. The processing method of an embodiment of this application includes: performing, by a first communication device, a first operation; the performing a first operation includes: sending first information to a second communication device; the first information includes at least one of the following: information used for indicating PDU Set information corresponding to a data packet is required, a first request, a first duration, a first timer, a first indication, and a first threshold; the first request is information used for requesting to activate an operation of marking the PDU Set information on the data packet; the first duration is a duration of the operation of marking the PDU Set information on the data packet; the first timer is a timer for the operation of marking the PDU Set information on the data packet; the first indication is used for indicating to activate the operation of marking the PDU Set information on the data packet in a case that a first condition is satisfied; and the first condition includes at least one of the following: congestion information is acquired, and the congestion information reaches or exceeds the first threshold.

## Description

### CROSS-REFERENCE TO RELATED APPLICATIONS

This application claims priority to Chinese Patent Application No. 202311432468.3 filed on October 31, 2023, and priority to Chinese Patent Application No. 202410563986.7 filed on May 8, 2024, which are incorporated herein by reference in their entirety.

### TECHNICAL FIELD

This application belongs to the technical field of wireless communication, and in particular to a processing method, a processing apparatus, a communication device, and a readable storage medium.

### BACKGROUND

With the development of wireless communication technologies, in a communication system, some operations are based on processing data at a granularity of a data packet set (e.g., a Protocol Data Unit (PDU) set (Set)). This requires obtaining data packet set information corresponding to a data packet. Therefore, it is necessary to mark, on a data packet, data packet set information corresponding to the data packet (e.g., PDU Set information). However, in a communication network, a data packet is not always marked with data packet set information corresponding to the data packet. Moreover, a network device (e.g., a radio access network (Radio Access Network, RAN)) that requires data packet set information corresponding to a data packet is a different communication device from a network device (e.g., a PDU session anchor (PDU Session Anchor, PSA) user plane function (User Plane Function, UPF)) that marks data packet set information corresponding to a data packet on a data packet, and there is a lack of a communication mechanism between the two. Therefore, there are scenarios where, in a case that the RAN requires data packet set information corresponding to a data packet, the PSA UPF does not mark, on the data packet, data packet set information corresponding to the data packet, so that the RAN cannot process data at a granularity of a data packet set (e.g., a PDU Set). Therefore, in the prior art, the mechanism for triggering an operation of marking "data packet set information (e.g., PDU Set information)" on a data packet is still imperfect.

### SUMMARY

Embodiments of this application provide a processing method, a processing apparatus, a communication device, and a readable storage medium, which can solve the problem of an imperfect mechanism for triggering an operation of marking "data packet set information (e.g., PDU Set information)" on a data packet.

According to a first aspect, a processing method is provided, which is performed by a first communication device. The method includes:
performing, by a first communication device, a first operation,
where the performing a first operation includes: sending, by the first communication device, first information to a second communication device,
where the first information includes at least one of the following: information used for indicating that PDU Set information corresponding to a data packet is required, a first request, a first duration, a first timer, a first indication, and a first threshold;
the first request is information used for requesting to activate an operation of marking the PDU Set information on the data packet;
the first duration is a duration of the operation of marking the PDU Set information on the data packet;
the first timer is a timer for the operation of marking the PDU Set information on the data packet;
the first indication is used for indicating to activate the operation of marking the PDU Set information on the data packet in a case that a first condition is satisfied; and the first condition includes at least one of the following: congestion information is acquired, and the congestion information reaches or exceeds the first threshold.

According to a second aspect, a processing method is provided, which is performed by a second communication device. The method includes:
performing, by a second communication device, a second operation, where the performing a second operation includes at least one of the following:
sending, to a first communication device, at least one of second information and protocol description information, where the second information is used for indicating at least one of the following: an operation of marking PDU Set information on a data packet is supported or not supported; requesting to activate the operation of marking the PDU Set information on the data packet is allowed or not allowed; PDU Set processing is allowed or not allowed; the data packet has been marked with the PDU Set information or has not been marked with the PDU Set information;
requesting a third communication device to activate the operation of marking the PDU Set information on the data packet, or requesting the third communication device to deactivate the operation of marking the PDU Set information on the data packet;
performing a first sub-operation;
performing a second sub-operation,
where
performing the first sub-operation includes at least one of the following:
   acquiring fourth information, including at least one of the following: first information, a validity duration of the first information, and protocol description information;
   performing, according to the fourth information, at least one of the following:
      accepting or rejecting the first information;
      sending an activation result to the first communication device;
      storing the first information;
      starting a first timing, where the first timing is a timing according to a first duration, and the first duration is a duration of the operation of marking the PDU Set information on the data packet, or starting timing of a first timer, where the first timer is a timer for the operation of marking the PDU Set information on the data packet;
      starting a second timing, where the second timing is a timing according to a validity duration of the first information, or starting timing of a second timer, where the second timer is a timer for validity of the first information;
      requesting the third communication device to activate the operation of marking the PDU Set information on the data packet;
      sending sixth information to the third communication device, where the sixth information includes at least one of the following: a first request, a first duration, a first timer, a first indication, and a first threshold;
      where
      performing the second sub-operation includes at least one of the following:
         acquiring fifth information, including at least one of the following: information used for indicating that the PDU Set information corresponding to the data packet is no longer required; a second request; information used for indicating that the first information is invalid; seventh information, where the seventh information is used for indicating one of the following: a terminal undergoes an inter-RAN transfer or transfers from the first communication device to another communication device, a PDU session quality of service (Quality of Service, QoS) flow undergoes an inter-RAN transfer or transfers from the first communication device to another communication device, and a QoS flow undergoes an inter-RAN transfer or transfers from the first communication device to another communication device;
         performing, according to the fifth information, at least one of the following:
            deleting the first information;
            accepting or rejecting the second request in a case that the fifth information includes the second request;
            sending a deactivation result to the first communication device;
            stopping a first timing, where the first timing is a timing according to a first duration; or stopping timing of a first timer, where the first timer is a timer for the operation of marking the PDU Set information on the data packet;
            stopping a second timing, where the second timing is a timing according to a validity duration of the first information; or stopping timing of a second timer, where the second timer is a timer for validity of the first information;
            requesting the third communication device to deactivate the operation of marking the PDU Set information on the data packet;
            sending, to the third communication device, information used for indicating that the sixth information is invalid;
            where
            the first information includes at least one of the following: information used for indicating that PDU Set information corresponding to a data packet is required, a first request, a first duration, a first timer, a first indication, and a first threshold;
            the first request is information used for requesting to activate the operation of marking the PDU Set information on the data packet;
            the second request is information used for requesting to stop the operation of marking the PDU Set information on the data packet;
            the first duration is a duration of the operation of marking the PDU Set information on the data packet;
            the first timer is a timer for the operation of marking the PDU Set information on the data packet;
            the second timer is a timer for validity of the first information;
            the first indication is used for indicating to activate the operation of marking the PDU Set information on the data packet in a case that a first condition is satisfied; and the satisfying a first condition includes at least one of the following: congestion information is acquired, and the congestion information reaches or exceeds the first threshold.

According to a third aspect, a processing method is provided, which is performed by a third communication device. The method includes:
performing, by a third communication device, a third operation, where the performing a third operation includes:
acquiring eighth information, where the eighth information includes at least one of sixth information and congestion information, where the sixth information includes at least one of the following: a first request, a first duration, a first timer, a first indication, and a first threshold;
performing, according to the eighth information, at least one of the following:
   activating an operation of marking the PDU Set information on the data packet or deactivating the operation of marking the PDU Set information on the data packet;
   accepting or rejecting the sixth information;
   starting a first timing, where the first timing is a timing according to a first duration, or starting timing of a first timer, where the first timer is a timer for the operation of marking the PDU Set information on the data packet;
   starting a third timing, where the third timing is a timing according to a validity duration of the sixth information, or starting timing of a third timer, where the third timer is a timer for validity of the sixth information,
   where
   the first request is information used for requesting to activate the operation of marking the PDU Set information on the data packet;
   the first duration is a duration of the operation of marking the PDU Set information on the data packet;
   the first indication is used for indicating to activate the operation of marking the PDU Set information on the data packet in a case that a first condition is satisfied; and the first condition includes at least one of the following: congestion information is acquired, and the congestion information reaches or exceeds the first threshold.

According to a fourth aspect, a processing apparatus is provided, which includes:
a first operation module, configured to perform a first operation, where the performing a first operation includes: sending, by a first communication device, first information to a second communication device,
where the first information includes at least one of the following: information used for indicating that PDU Set information corresponding to a data packet is required, a first request, a first duration, a first timer, a first indication, and a first threshold;
the first request is information used for requesting to activate an operation of marking the PDU Set information on the data packet;
the first duration is a duration of the operation of marking the PDU Set information on the data packet;
the first timer is a timer for the operation of marking the PDU Set information on the data packet;
the first indication is used for indicating to activate the operation of marking the PDU Set information on the data packet in a case that a first condition is satisfied; and the first condition includes at least one of the following: congestion information is acquired, and the congestion information reaches or exceeds the first threshold.

According to a fifth aspect, a processing apparatus is provided, which includes:
a second operation module, configured to perform a second operation, where the performing a second operation includes at least one of the following:
sending, to a first communication device, at least one of second information and protocol description information, where the second information is used for indicating at least one of the following: an operation of marking PDU Set information on a data packet is supported or not supported; requesting to activate the operation of marking the PDU Set information on the data packet is allowed or not allowed; PDU Set processing is allowed or not allowed; the data packet has been marked with the PDU Set information or has not been marked with the PDU Set information;
requesting a third communication device to activate the operation of marking the PDU Set information on the data packet, or requesting the third communication device to deactivate the operation of marking the PDU Set information on the data packet;
performing a first sub-operation;
performing a second sub-operation,
where
performing the first sub-operation includes at least one of the following:
   acquiring fourth information, including at least one of the following: first information, a validity duration of the first information, and protocol description information;
   performing, according to the fourth information, at least one of the following:
   accepting or rejecting the first information;
   sending an activation result to the first communication device;
   storing the first information;
   starting a first timing, where the first timing is a timing according to a first duration, and the first duration is a duration of the operation of marking the PDU Set information on the data packet, or starting timing of a first timer, where the first timer is a timer for the operation of marking the PDU Set information on the data packet;
   starting a second timing, where the second timing is a timing according to a validity duration of the first information, or starting timing of a second timer, where the second timer is a timer for validity of the first information;
   requesting the third communication device to activate the operation of marking the PDU Set information on the data packet;
   sending sixth information to the third communication device, where the sixth information includes at least one of the following: a first request, a first duration, a first timer, a first indication, and a first threshold;
   where
   performing the second sub-operation includes at least one of the following:
      acquiring fifth information, including at least one of the following: information used for indicating that the PDU Set information corresponding to the data packet is no longer required; a second request; information used for indicating that the first information is invalid; seventh information, where the seventh information is used for indicating one of the following: a terminal undergoes an inter-RAN transfer or transfers from the first communication device to another communication device, a PDU session QoS flow undergoes an inter-RAN transfer or transfers from the first communication device to another communication device, and a QoS flow undergoes an inter-RAN transfer or transfers from the first communication device to another communication device;
      performing, according to the fifth information, at least one of the following:
      deleting the first information;
      accepting or rejecting the second request in a case that the fifth information includes the second request;
      sending a deactivation result to the first communication device;
      stopping a first timing, where the first timing is a timing according to a first duration; or stopping timing of a first timer, where the first timer is a timer for the operation of marking the PDU Set information on the data packet;
      stopping a second timing, where the second timing is a timing according to a validity duration of the first information; or stopping timing of a second timer, where the second timer is a timer for validity of the first information;
      requesting the third communication device to deactivate the operation of marking the PDU Set information on the data packet;
      sending, to the third communication device, information used for indicating that the sixth information is invalid;
      where
      the first information includes at least one of the following: information used for indicating that PDU Set information corresponding to a data packet is required, a first request, a first duration, a first timer, a first indication, and a first threshold;
      the first request is information used for requesting to activate the operation of marking the PDU Set information on the data packet;
      the second request is information used for requesting to stop the operation of marking the PDU Set information on the data packet;
      the first duration is a duration of the operation of marking the PDU Set information on the data packet;
      the first timer is a timer for the operation of marking the PDU Set information on the data packet;
      the second timer is a timer for validity of the first information;
      the first indication is used for indicating to activate the operation of marking the PDU Set information on the data packet in a case that a first condition is satisfied; and the satisfying a first condition includes at least one of the following: congestion information is acquired, and the congestion information reaches or exceeds the first threshold.

According to a sixth aspect, a processing apparatus is provided, which includes:
a third operation module, configured to perform a third operation, where the performing a third operation includes:
acquiring eighth information, where the eighth information includes at least one of sixth information and congestion information, where the sixth information includes at least one of the following: a first request, a first duration, a first timer, a first indication, and a first threshold;
performing, according to the eighth information, at least one of the following:
   activating an operation of marking the PDU Set information on the data packet or deactivating the operation of marking the PDU Set information on the data packet;
   accepting or rejecting the sixth information;
   starting a first timing, where the first timing is a timing according to a first duration, or starting timing of a first timer, where the first timer is a timer for the operation of marking the PDU Set information on the data packet;
   starting a third timing, where the third timing is a timing according to a validity duration of the sixth information, or starting timing of a third timer, where the third timer is a timer for validity of the sixth information,
   where
   the first request is information used for requesting to activate the operation of marking the PDU Set information on the data packet;
   the first duration is a duration of the operation of marking the PDU Set information on the data packet;
   the first indication is used for indicating to activate the operation of marking the PDU Set information on the data packet in a case that a first condition is satisfied; and the first condition includes at least one of the following: congestion information is acquired, and the congestion information reaches or exceeds the first threshold.

According to a seventh aspect, a communication device is provided, a terminal including a processor and a memory, the memory storing a program or an instruction executable on the processor, the program or the instruction, when executed by the processor, implementing the steps of the method according to the first aspect, the second aspect, or the third aspect.

According to an eighth aspect, a communication device is provided, which includes a processor and a communication interface, where the processor is configured to perform a first operation, where the performing a first operation includes: sending, by a first communication device, first information to a second communication device,
where the first information includes at least one of the following: information used for indicating that PDU Set information corresponding to a data packet is required, a first request, a first duration, a first timer, a first indication, and a first threshold;
the first request is information used for requesting to activate an operation of marking the PDU Set information on the data packet;
the first duration is a duration of the operation of marking the PDU Set information on the data packet;
the first timer is a timer for the operation of marking the PDU Set information on the data packet;
the first indication is used for indicating to activate the operation of marking the PDU Set information on the data packet in a case that a first condition is satisfied; and the first condition includes at least one of the following: congestion information is acquired, and the congestion information reaches or exceeds the first threshold.

According to a ninth aspect, a communication device is provided, which includes a processor and a communication interface, where the processor is configured to perform a second operation, where the performing a second operation includes at least one of the following:
sending, to a first communication device, at least one of second information and protocol description information, where the second information is used for indicating at least one of the following: an operation of marking PDU Set information on a data packet is supported or not supported; requesting to activate the operation of marking the PDU Set information on the data packet is allowed or not allowed; PDU Set processing is allowed or not allowed; the data packet has been marked with the PDU Set information or has not been marked with the PDU Set information;
requesting a third communication device to activate the operation of marking the PDU Set information on the data packet, or requesting the third communication device to deactivate the operation of marking the PDU Set information on the data packet;
performing a first sub-operation;
performing a second sub-operation,
where
performing the first sub-operation includes at least one of the following:
   acquiring fourth information, including at least one of the following: first information, a validity duration of the first information, and protocol description information;
   performing, according to the fourth information, at least one of the following:
      accepting or rejecting the first information;
      sending an activation result to the first communication device;
      storing the first information;
      starting a first timing, where the first timing is a timing according to a first duration, and the first duration is a duration of the operation of marking the PDU Set information on the data packet, or starting timing of a first timer, where the first timer is a timer for the operation of marking the PDU Set information on the data packet;
      starting a second timing, where the second timing is a timing according to a validity duration of the first information, or starting timing of a second timer, where the second timer is a timer for validity of the first information;
      requesting the third communication device to activate the operation of marking the PDU Set information on the data packet;
      sending sixth information to the third communication device, where the sixth information includes at least one of the following: a first request, a first duration, a first timer, a first indication, and a first threshold;
      where
      performing the second sub-operation includes at least one of the following:
         acquiring fifth information, including at least one of the following: information used for indicating that the PDU Set information corresponding to the data packet is no longer required; a second request; information used for indicating that the first information is invalid; seventh information, where the seventh information is used for indicating one of the following: a terminal undergoes an inter-RAN transfer or transfers from the first communication device to another communication device, a PDU session QoS flow undergoes an inter-RAN transfer or transfers from the first communication device to another communication device, and a QoS flow undergoes an inter-RAN transfer or transfers from the first communication device to another communication device;
         performing, according to the fifth information, at least one of the following:
            deleting the first information;
            accepting or rejecting the second request in a case that the fifth information includes the second request;
            sending a deactivation result to the first communication device;
            stopping a first timing, where the first timing is a timing according to a first duration; or stopping timing of a first timer, where the first timer is a timer for the operation of marking the PDU Set information on the data packet;
            stopping a second timing, where the second timing is a timing according to a validity duration of the first information; or stopping timing of a second timer, where the second timer is a timer for validity of the first information;
            requesting the third communication device to deactivate the operation of marking the PDU Set information on the data packet;
            sending, to the third communication device, information used for indicating that the sixth information is invalid;
            where
            the first information includes at least one of the following: information used for indicating that PDU Set information corresponding to a data packet is required, a first request, a first duration, a first timer, a first indication, and a first threshold;
            the first request is information used for requesting to activate the operation of marking the PDU Set information on the data packet;
            the second request is information used for requesting to stop the operation of marking the PDU Set information on the data packet;
            the first duration is a duration of the operation of marking the PDU Set information on the data packet;
            the first timer is a timer for the operation of marking the PDU Set information on the data packet;
            the second timer is a timer for validity of the first information;
            the first indication is used for indicating to activate the operation of marking the PDU Set information on the data packet in a case that a first condition is satisfied; and the satisfying a first condition includes at least one of the following: congestion information is acquired, and the congestion information reaches or exceeds the first threshold.

According to a tenth aspect, a communication device is provided, which includes a processor and a communication interface, where the processor is configured to perform a third operation, where the performing a third operation includes:
acquiring eighth information, where the eighth information includes at least one of sixth information and congestion information, where the sixth information includes at least one of the following: a first request, a first duration, a first timer, a first indication, and a first threshold;
performing, according to the eighth information, at least one of the following:
   activating an operation of marking the PDU Set information on the data packet or deactivating the operation of marking the PDU Set information on the data packet;
   accepting or rejecting the sixth information;
   starting a first timing, where the first timing is a timing according to a first duration, or starting timing of a first timer, where the first timer is a timer for the operation of marking the PDU Set information on the data packet;
   starting a third timing, where the third timing is a timing according to a validity duration of the sixth information, or starting timing of a third timer, where the third timer is a timer for validity of the sixth information,
   where
   the first request is information used for requesting to activate the operation of marking the PDU Set information on the data packet;
   the first duration is a duration of the operation of marking the PDU Set information on the data packet;
   the first indication is used for indicating to activate the operation of marking the PDU Set information on the data packet in a case that a first condition is satisfied; and the first condition includes at least one of the following: congestion information is acquired, and the congestion information reaches or exceeds the first threshold.

According to an eleventh aspect, a readable storage medium is provided, where the readable storage medium stores a program or an instruction, where the program or the instruction, when executed by a processor, implements the steps of the method according to the first aspect, the second aspect, the third aspect, or the fourth aspect.

According to a twelfth aspect, a wireless communication system is provided, which includes: a first communication device, a second communication device, and a third communication device, where the first communication device is configured to perform the steps of the method according to the first aspect, the second communication device is configured to perform the steps of the method according to the second aspect, and the third communication device is configured to perform the steps of the method according to the third aspect.

According to a thirteenth aspect, a chip is provided, where the chip includes a processor and a communication interface, where the communication interface is coupled to the processor, and the processor is configured to execute a program or an instruction to implement the method according to the first aspect, the second aspect, or the third aspect.

According to a fourteenth aspect, a computer program/program product is provided, where the computer program/program product is stored in a storage medium, and the computer program/program product is executed by at least one processor to implement the steps of the method according to the first aspect, the second aspect, or the third aspect.

In the embodiments of this application, by sending, by the first communication device, the first information to the second communication device, in a case that the first communication device requires PDU Set information and a core network device does not mark PDU Set information, the operation of marking the PDU Set information on the data packet by the core network device may be activated, thereby enabling the first communication device to obtain PDU Set information. In this way, the embodiments of this application provide a mechanism for how to trigger an operation of marking data packet set information (e.g., PDU Set information) on a data packet, improving the flexibility of marking PDU Set information. Therefore, the embodiments of this application improve the reliability of communication. For example, in a case that congestion occurs in an RAN, an operation of marking the PDU Set information on the data packet is activated, and after acquiring the PDU Set information, packet dropping may be performed based on the PDU Set information to alleviate pressure on network resources.

### BRIEF DESCRIPTION OF THE DRAWINGS

FIG. 1 is a block diagram of a wireless communication system applicable to embodiments of this application;
FIG. 2 is a first flowchart of a processing method according to an embodiment of this application;
FIG. 3 is a second flowchart of a processing method according to an embodiment of this application;
FIG. 4 is a third flowchart of a processing method according to an embodiment of this application;
FIG. 5A is a flowchart of a processing method according to Embodiment 1 of this application;
FIG. 5B is a flowchart of a processing method according to Embodiment 2 of this application;
FIG. 5C is a flowchart of a processing method according to Embodiment 3 of this application;
FIG. 6A is a flowchart of a processing method according to Embodiment 4 of this application;
FIG. 6B is a flowchart of a processing method according to Embodiment 5 of this application;
FIG. 6C is a flowchart of a processing method according to Embodiment 6 of this application;
FIG. 7 is a flowchart of a processing method according to Embodiment 7 of this application;
FIG. 8 is a flowchart of a processing method according to Embodiment 8 of this application;
FIG. 9 is a first schematic structural diagram of a processing apparatus according to an embodiment of this application;
FIG. 10 is a second schematic structural diagram of a processing apparatus according to an embodiment of this application;
FIG. 11 is a third schematic structural diagram of a processing apparatus according to an embodiment of this application;
FIG. 12 is a first schematic structural diagram of a communication device according to an embodiment of this application;
FIG. 13 is a first schematic hardware structural diagram of a network-side device according to an embodiment of this application; and
FIG. 14 is a second schematic hardware structural diagram of a network-side device according to an embodiment of this application.

### DETAILED DESCRIPTION

Terms such as "first" and "second" in this application are used for distinguishing similar objects, instead of describing a specific order or sequence. It is to be understood that terms used in this way are exchangeable in a proper case, so that the embodiments of this application can be implemented in an order different from the order shown or described herein; and the objects distinguished by "first" and "second" are usually of the same class and do not limit the number of the objects; for example, the number of first objects may be one or more. In addition, "or" in this application represents at least one of the connected objects. For example, "A or B" covers three scenarios, namely, scenario one: including A and not including B; scenario two: including B and not including A; and scenario three: including both A and B. The character "/" generally represents an "or" relationship between the associated objects.

The term "indicate" in this application may be a direct indication (or explicit indication) or an indirect indication (or implicit indication). Herein, a direct indication may be understood as: a sender explicitly informs, in a sent indication, a receiver of specific information, an operation to be performed, a request result, or the like; an indirect indication may be understood as: a receiver determines corresponding information according to the indication sent by the sender, or makes a determination and determines, according to a determination result, an operation to be performed, a request result, or the like.

It is worth pointing out that the technologies described in the embodiments of this application are not limited to the long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single Carrier Frequency Division Multiple Access, SC-FDMA), and other systems. The terms "system" and "network" in the embodiments of this application can be usually exchanged in use. The technologies described not only can be applied to the systems and radio technologies mentioned above, and but also can be applied to other systems and radio technologies. The following description describes the new radio (New Radio, NR) system for example purposes and uses NR terminology in most of the following description, but these technologies can also be applied to systems in addition to NR systems, such as 6^{th} generation (6^{th} Generation, 6G) communication systems.

In communication services (such as extended reality (Extended Reality, XR) services), a video frame or a video slice is often a set composed of multiple data packets. Processing at a granularity of a data packet set may be referred to as PDU Set processing. Marking PDU Set information on the data packet refers to marking, on a data packet, information of a PDU Set to which the data packet belongs.

Currently, only in a case that specific conditions are satisfied (e.g., an RAN supports PDU Set processing, and at least one of a delay budget (PDU Set Delay Budget, PSDB), a PDU set error rate (PDU Set Error Rate, PSER), and PDU Set integrated handling information (PDU Set Integrated Handling Information, PSIHI) is accepted by the RAN), a PSA UPF marks PDU Set information in a general packet radio service (General Packet Radio Service, GPRS) tunneling protocol (GPRS Tunneling Protocol, GTP)-U header of a data packet, and the RAN can acquire, from the GTP-U header of the received data packet, the PDU Set information corresponding to the data packet. However, in a case that the above specific conditions are not satisfied (e.g., a core network (Core Network, CN) does not send at least one of PSDB, PSER, and PSIHI to the RAN, or the RAN rejects any one of PSDB, PSER, and PSIHI), there still exist some scenarios where the RAN requires the PDU Set information corresponding to the data packet: for example, congestion occurs in the RAN, and the RAN needs to perform packet dropping based on PDU set importance (PDU Set Importance, PSI), such as dropping data packets of a secondary PDU Set. Therefore, the following problems need to be solved:

Problem 1: For a data flow, if a core network device supports marking PDU Set information on a header of a data packet but does not do so (e.g., PSER, PSDB, and PSIHI are rejected by the RAN, and the core network device does not mark the PDU Set information on the header of the data packet in a QoS flow; or, for another example, an application function (Application Function, AF) does not request PDU Set QoS processing for a data flow, and the core network device does not mark the PDU Set information on the header of the data packet in the QoS flow), while the RAN requires PDU Set information of the data packet (e.g., in a case that congestion occurs, the RAN needs to perform packet dropping based on PSI), the problem of how to activate marking PDU Set information on the header of the data packet needs to be solved.

Problem 2: Marking PDU Set information on the header of the data packet by the core network device needs to be based on protocol description information. If the protocol information does not exist, the core network device or the QoS flow does not support marking PDU Set information on the header of the data packet in the QoS flow. In such a scenario, if the RAN is unaware of this and requests the core network device to activate marking PDU Set information on the header of the data packet, the request will always fail.

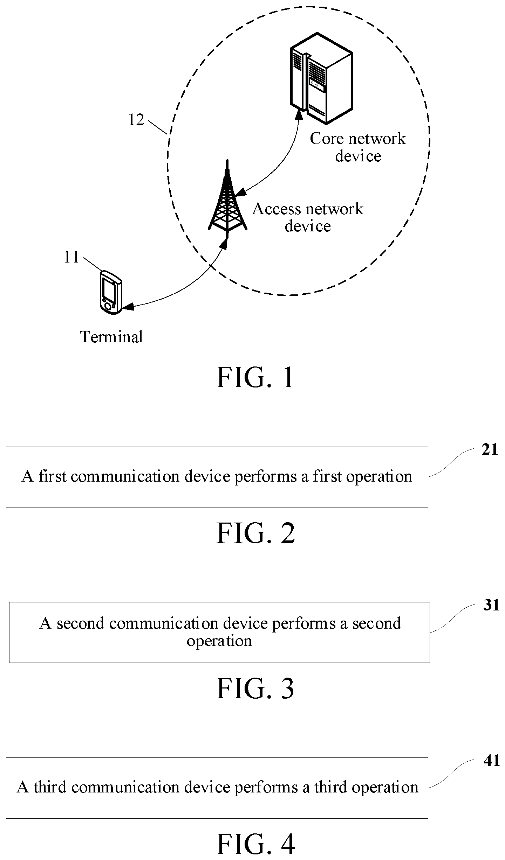

FIG. 1 shows a block diagram of a wireless communication system applicable to embodiments of this application. The wireless communication system includes a terminal 11 and a network-side device 12. Herein, the terminal 11 may be a terminal-side device such as a mobile phone, a tablet personal computer (Tablet Personal Computer), a laptop computer (Laptop Computer), a personal digital assistant (Personal Digital Assistant, PDA), a hand-held computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), ship user equipment, pedestrian user equipment (Pedestrian User Equipment, PUE), smart home (home devices with wireless communication functions, such as refrigerators, televisions, washing machines, or furniture), a game console, a personal computer (Personal Computer, PC), an automated teller machine or a self-service machine. The wearable device includes a smart watch, a smart bracelet, a smart headphone, smart glasses, smart jewelry (smart bracelet, smart hand chain, smart ring, smart necklace, smart anklet, smart ankle chain, etc.), a smart wristband, smart clothing, etc. Herein, the vehicle user equipment may also be referred to as an in-vehicle terminal, an in-vehicle controller, an in-vehicle module, an in-vehicle component, an in-vehicle chip, or an in-vehicle unit. It is to be understood that the specific type of the terminal 11 is not limited in embodiments of this application. The network-side device 12 may include an access network device or a core network device. Herein, the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), or a wireless fidelity (Wireless Fidelity, WiFi) node, etc. Herein, a base station may be referred to as a node B (Node B, NB), an evolved node B (Evolved Node B, eNB), the next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or any other appropriate term in the field, as long as the same technical effect is achieved. The base station is not limited to specific technical vocabulary. It should be noted that in the embodiments of this application, only a base station in an NR system is used as an example for description, and the specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS) a centralized network configuration (Centralized Network Configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), etc. It is to be understood that the embodiments of this application are introduced only by taking a core network device in an NR system as an example, and the specific type of the core network device is not limited.

Optionally, acquiring may be understood as obtaining from configuration, receiving, receiving after a request, acquiring through self-learning, deriving from the absence of received information, or obtaining after processing based on received data, which may be specifically determined according to actual needs, and the embodiments of this application are not limited thereto. For example, when certain capability indication information sent by a device is not received, it may be derived that the device does not support the capability.

Optionally, sending may include broadcasting, broadcasting in system messages, and returning after responding to a request.

In an optional embodiment of this application, a communication device may include at least one of the following: a communication network element and a terminal.

In an implementation of this application, the communication network element may include at least one of the following: a core network element and a radio access network element.

In the embodiments of this application, a core network element (core network element) may include, but is not limited to, at least one of the following: a core network device, a core network node, a core network function, a core network element, a mobility management entity (Mobility Management Entity, MME), an access management function (Access Management Function, AMF), a session management function (Session Management Function, SMF), a user plane function (User Plane Function, UPF), a serving gateway (serving GW, SGW), a PDN gateway (PDN Gate Way, PDN gateway), a policy control function (Policy Control Function, PCF), a policy and charging rules function unit (Policy and Charging Rules Function, PCRF), a serving GPRS support node (Serving GPRS Support Node, SGSN), a gateway GPRS support node (Gateway GPRS Support Node, GGSN), and an application function (Application Function).

In the embodiments of this application, an RAN element may include, but is not limited to, at least one of the following: a radio access network device, a radio access network node, a radio access network function, a radio access network unit, a 3^{rd} generation partnership project (3^{rd} Generation Partnership Project, 3GPP) radio access network, a non-3GPP radio access network, a centralized unit (Centralized Unit, CU), a distributed unit (Distributed Unit, DU), a base station, an evolved node B (evolved Node B, eNB), a 5^{th} Generation (5^{th} Generation, 5G) base station (the next generation Node B, gNB), a radio network controller (Radio Network Controller, RNC), a NodeB (NodeB), a non-3GPP interworking function (Non-3GPP Inter Working Function, N3IWF), an access controller (Access Controller, AC) node, an access point (Access Point, AP) device, a wireless local area network (Wireless Local Area Networks, WLAN) node, or an N3IWF.

A base station may be a base transceiver station (Base Transceiver Station, BTS) in GSM or CDMA, or a NodeB in WCDMA, or an evolved Node B (eNB or e-NodeB, evolutional Node B) in LTE, and a 5G base station (gNB), which is not limited in the embodiments of this application.

In an implementation of this application, the UE may include one of the following: a terminal device, a terminal device and a card, and a card.

In an implementation of this application, the card may include one of the following: a subscriber identity module (Subscriber Identity Module, SIM) card, a universal subscriber identity module (Universal Subscriber Identity Module, USIM) card, or an embedded Subscriber identity module (Embedded Subscriber Identity Module, eSIM).

In an implementation of this application, the terminal may include at least one of the following: a relay supporting a terminal function, and a terminal supporting a relay function. The terminal may also be referred to as a terminal device or user equipment (User Equipment, UE). The terminal may be a terminal-side device such as a mobile phone, a tablet personal computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It should be noted that the specific type of the terminal is not limited in the embodiments of this application.

In an implementation of this application, the PDU Set may be understood as or replaced with a data packet set, or may also be understood as or replaced with other equivalent names defined in future communication protocols that have the same meaning as the PDU Set or the data packet set.

In an implementation of this application, the data flow is an abbreviation for service data flow, and may also be referred to as a service flow.

In an implementation of this application, transfer includes handover. For example, an inter-RAN transfer may be understood as an inter-RAN handover, i.e., handover from one RAN to another RAN.

In an implementation of this application, the channel may also be referred to as a path.

In an implementation of this application, deactivation refers to one of the following: stopping marking, no longer marking, and not marking.

In an implementation of this application, activation refers to one of the following: starting marking, marking, and applying.

In an implementation, stopping the operation of marking the PDU Set information on the data packet may be understood as deactivating the operation of marking the PDU Set information on the data packet, i.e., no longer performing the operation of marking the PDU Set information on the data packet.

In an implementation of this application, supporting includes one of the following: being capable of applying, enabling (enable), being feasible, or being possible (Possible).

In an implementation of this application, being supported includes one of the following: being capable of being applied, being feasible, and being possible (Possible).

In an implementation of this application, applying may also be referred to as one of the following: using, adopting, executing, and performing.

In an implementation, the data packet set (e.g., PDU Set) information corresponding to the data packet (e.g., PDU, Packet Data Convergence Protocol (PDCP) service data unit (Service Data Unit, SDU), or a PDCP PDU) is at least one of: information related to the data packet set to which the data packet belongs, and information related to the data packet within the data packet set to which it belongs (e.g., a sequence number of the data packet in the data packet set).

In an implementation, the "data packet set information" may also be referred to as "PDU Set information".

In an implementation of this application, the data packet set information includes, but is not limited to, at least one of the following:
data packet set importance;
data packet set size (Size);
the number of data packets in a data packet set;
data packet set end indication information;
data packet set start indication information;
a sequence number of a data packet in a data packet set;
a sequence number of a data packet set;
a duration of a data packet set;
an interval time between data packet sets or an interval time between a data packet set and a next data packet set;
a period of a data packet set.

In an implementation of this application, the PDU Set information includes, but is not limited to, at least one of the following:
PDU Set importance;
PDU Set size Size;
the number of data packets in a PDU Set;
PDU Set end indication information;
PDU Set start indication information;
a sequence number of a data packet in a PDU Set;
a sequence number of a PDU Set;
a duration of a PDU Set;
an interval time between PDU Sets or an interval time between a PDU Set and a next PDU Set;
a period of a PDU Set.

In an implementation of this application, the PDU Set size Size refers to a size of the PDU Set, such as an amount of data, which may be measured by bytes, bits, or the number of data packets.

In an implementation of this application, the PDU Set end indication information is used for indicating whether a data packet carrying the PDU Set end indication information is an end data packet or a last data packet of the PDU Set or not. The PDU Set end indication information may be embodied through an indication, or may be embodied through encoding together with other information.

In an implementation of this application, the PDU Set start indication information is used for indicating whether a data packet carrying the PDU Set start indication information is a start data packet or a first data packet of the PDU Set or not. The PDU Set start indication information may be embodied through an indication, or may be embodied through encoding together with other information.

In an implementation of this application, for the sequence number of the data packet in the PDU Set, for example, in a case that a PDU Set includes multiple data packets, e.g., five data packets, sequence numbers of the five data packets in the PDU Set may be 1, 2, 3, 4, and 5, respectively.

In an implementation of this application, for the sequence number of the PDU Set, for example, in a case that multiple PDU Sets exist, which are PDU Set 1, PDU Set 2, and PDU Set 3, respectively, sequence numbers of the PDU Sets may be 1, 2, and 3, respectively.

In an implementation of this application, the duration of the PDU Set may be one of the following: an interval time between a reception time of a last received data packet of the PDU Set and a reception time of a first received data packet of the PDU Set, or an interval time between a sending time of a last sent data packet of the PDU Set and a sending time of a first sent data packet of the PDU Set.

In an implementation of this application, the interval time between PDU Sets is an interval time between a PDU Set and a next PDU Set.

In an implementation of this application, the period of the PDU Set refers to interval times between PDU Sets being balanced, reflecting a characteristic of a period.

In an implementation, the PDU Set processing (which may be an abbreviation for processing based on a PDU Set) includes at least one of the following:
processing data packets at a granularity of a data packet set;
applying PDU Set QoS;
processing based on PDU Set QoS (which may be an abbreviation for one of the following: processing based on a PDU Set QoS parameter, or QoS processing based on a PDU Set) (which may further be abbreviated as processing based on PDU Set QoS);
applying PDU Set importance;
processing based on PDU Set importance.

It is easy to understand that, in an implementation, the PDU Set processing does not include at least one of the following: processing based on a PDU Set QoS parameter, or QoS processing based on a PDU Set, and applying PDU Set QoS; in another implementation, the PDU Set processing includes at least one of the following: processing based on a PDU Set QoS parameter, QoS processing based on a PDU Set, and applying PDU Set QoS.

In an implementation, requesting PDU Set processing includes requesting to perform PDU Set processing on uplink and/or downlink.

In an implementation, a request corresponding to a first object being used for requesting to apply PDU Set processing to the first object includes requesting to perform PDU Set processing on uplink and/or downlink of the first object.

In an implementation, applying processing based on PDU Set importance includes: dropping the PDU Set according to PDU Set importance in a case of congestion, for example, dropping from low importance to high importance.

Optionally, the first object includes at least one of the following: a radio bearer (such as a data radio bearer (Data Radio Bearer, DRB) or a logical channel), a QoS flow, a data flow, a PDU session, and a terminal.

In an implementation, the QoS flow is a QoS flow to which the radio bearer is mapped.

In an implementation, the radio bearer is a radio bearer to which the QoS flow is mapped.

In an optional embodiment of this application, the data packet set may be abbreviated as data set. The data packet set includes one or more data packets. Optionally, the data packet set has a boundary.

In an optional embodiment of this application, the data packet set is a concept in a cellular mobile communication network. The data packet set may be a segment composed of one or more data packets in a channel (e.g., a QoS flow, a QoS sub-flow, or a radio bearer) or a set composed of one or more data packets.

In an optional embodiment of this application, the data packet may be a protocol data unit PDU.

In an optional embodiment of this application, the data packet set (Packet Set Delay Budget) may be one of the following: a protocol data unit set PDU Set, an instance of a PDU Set, a PDU Set category, an instance of a PDU Set category, or a data segment or a data packet set in a channel (e.g., a QoS flow, a QoS sub-flow, or a radio bearer).
(1) In an implementation, one type of PDU Set may include multiple PDU Set instances. One type of PDU Set may be identified by a PDU Set identifier (e.g., a PDU Set-level QoS identifier). Multiple different PDU Set instances of the same PDU Set may be distinguished by a data packet set sequence number (e.g., a PDU Set sequence number).
(2) In another implementation, one PDU Set category may include multiple PDU Sets. The PDU Set is an instance of the PDU Set category. The PDU Set category may be identified by a PDU Set identifier (e.g., a PDU Set-level QoS identifier). Multiple different PDU Sets of the same PDU Set category may be distinguished by a data packet set sequence number (e.g., a PDU Set sequence number).

In an optional embodiment of this application, the data packet set category may be one of the following: a protocol data unit set (PDU Set), and a channel (such as a QoS flow, a QoS sub-flow, or a radio bearer). One data packet set category may correspond to multiple data packet sets. The data packet set is an instance of the data packet set category. The data packet set category may be identified by a data packet set category identifier. The data packet set category identifier is, for example, a data packet set-level QoS identifier. In this case, multiple data packet sets may be distinguished by sequence numbers of the data packet sets.

In an implementation, categories of the one or more data packet sets are the same or different. Data packet sets of different categories may be distinguished by identifiers of the data packet sets. Different data packet sets of the same category may be distinguished by sequence numbers of the data packet sets.

In an optional embodiment of this application, the data packet set (e.g., PDU set) is composed of one or more data packets (e.g., PDUs). PDU set: a PDU set is composed of one or more PDUs, and these PDUs carry a payload of an information unit generated at an application level (e.g., a frame or a video slice). In some implementations, an application layer requires all PDUs in a PDU set to use a corresponding information unit. In other implementations, when some PDUs are lost, the application layer may still recover all or part of the information unit.

In an implementation of this application, PDU Set QoS or a PDU Set QoS parameter includes at least one of the following: a PDU set error rate (PDU Set Error Rate, PSER), a PDU set delay budget (PDU Set Delay Budget, PSDB), and PDU Set integrated handling information (PDU Set Integrated Handling Information, PSIHI).

PSIHI may be used to require PDU Set integrated handling.

In another implementation, PDU Set QoS further includes PDU Set importance. That is, PDU Set importance may or may not be part of PDU Set QoS.

In an implementation of this application, applying PDU Set QoS includes at least one of the following: performing PDU Set-level QoS guarantee on data according to the PDU Set QoS, scheduling, and time-frequency resource configuration.

Applying PDU Set processing on uplink by the second communication device (RAN) includes: processing uplink data based on a PDU Set parameter (including at least one of PDU Set QoS and PDU Set importance), such as scheduling, resource allocation, and configuring a packet dropping timer, etc.

In an implementation of this application, processing based on PDU Set importance includes packet dropping based on PDU Set importance.

In an implementation of this application, PDU Set dropping includes at least one of the following: packet dropping based on PDU Set importance, and overall dropping of a PDU Set.

In an implementation of this application, applying processing based on PDU Set importance includes: dropping a PDU Set according to PDU Set importance in a case of congestion, for example, dropping from low importance to high importance.

In an implementation of this application, the PDU Set QoS is used for implicitly indicating at least one of the following: applying PDU Set QoS on downlink, and applying processing based on PDU Set QoS on downlink.

In an implementation of this application, applying PDU Set importance implicitly indicates: applying PDU Set importance on downlink.

In an implementation of this application, applying processing based on PDU Set importance implicitly indicates: applying processing based on PDU Set importance on downlink.

In an implementation of this application, applying or not applying PDU Set importance includes: applying or not applying PDU Set importance on at least one of uplink and downlink.

In an implementation of this application, applying or not applying processing based on PDU Set importance includes: applying or not applying processing based on PDU Set importance on at least one of uplink and downlink.

A processing method, a processing apparatus, a communication device, and a readable storage medium provided in the embodiments of this application will be described below in detail through some embodiments and application scenarios thereof with reference to the drawings.

Please refer to FIG. 2, an embodiment of this application provides a processing method, applied to a first communication device. The first communication device includes, but is not limited to, a radio access network device (such as a base station, or a source RAN network element of the terminal or the QoS flow handover in a scenario where a terminal or a QoS flow undergoes handover). The method includes the following step:
In step 21, a first communication device performs a first operation,
where the performing a first operation includes: sending, by the first communication device, first information to a second communication device,
where the first information includes at least one of the following: information used for indicating that PDU Set information corresponding to a data packet is required, a first request, a first duration, a first timer, a first indication, and a first threshold;
the first request is information used for requesting to activate an operation of marking the PDU Set information on the data packet;
the first duration is a duration of the operation of marking the PDU Set information on the data packet;
the first timer is a timer for the operation of marking the PDU Set information on the data packet;
the first indication is used for indicating to activate the operation of marking the PDU Set information on the data packet in a case that a first condition is satisfied; and the first condition includes at least one of the following: congestion information is acquired, and the congestion information reaches or exceeds the first threshold.

In an implementation, the data packet set information (e.g., PDU Set) corresponding to the data packet (e.g., a PDU, a PDCP SDU, or a PDCP PDU) is at least one of: information related to the data packet set to which the data packet belongs, and information (e.g., a sequence number of the data packet in the data packet set) related to the data packet within the data packet set to which it belongs.

In an implementation, the "data packet set information" may also be referred to as "PDU Set information".

Optionally, the data packet set information includes, but is not limited to, at least one of the following:
data packet set importance;
data packet set size Size;
the number of data packets in a data packet set;
data packet set end indication information;
data packet set start indication information;
a sequence number of a data packet in a data packet set;
a sequence number of a data packet set;
a duration of a data packet set;
an interval time between data packet sets or an interval time between a data packet set and a next data packet set;
a period of a data packet set.

Optionally,
the PDU Set information includes, but is not limited to, at least one of the following:
PDU Set importance;
PDU Set size Size;
the number of data packets in a PDU Set;
PDU Set end indication information;
PDU Set start indication information;
a sequence number of a data packet in a PDU Set;
a sequence number of a PDU Set;
a duration of a PDU Set;
an interval time between PDU Sets or an interval time between a PDU Set and a next PDU Set;
a period of a PDU Set.

In an implementation, the first threshold is used for a second communication device to activate the operation of marking the PDU Set information on the data packet in a case that congestion information reaches or exceeds the first threshold.

In an implementation, the operation of marking the PDU Set information on the data packet includes at least one of the following:
detecting a PDU Set to which the data packet belongs and/or PDU Set information;
an operation of setting the PDU Set information on a header of the data packet (e.g., a GTP-U header (including a GTP-U extension header)).

Optionally, the first communication device includes an RAN, and the second communication device includes a core network device (e.g., SMF, PCF, or UPF).

Optionally, the performing a first operation further includes sending, to the second communication device, one of the following: a validity duration of the first information, and a second timer,
where the second timer is a timer for validity of the first information.

In an implementation, after receiving the first information, the second communication device activates, according to the first information, the operation of marking the PDU Set information on the data packet in different situations.

For example, in a case that the first information includes an activation request, the second communication device may activate the operation of marking the PDU Set information on the data packet immediately or in a case that a preset condition is satisfied.

For example, in a case that the first information includes the first duration, the second communication device may activate the operation of marking the PDU Set information on the data packet immediately or in a case that a preset condition is satisfied, and a duration for performing the operation of marking the PDU Set information on the data packet is equal to the first duration.

For example, in a case that the first information includes the first timer, the second communication device may activate the operation of marking the PDU Set information on the data packet immediately or in a case that a preset condition is satisfied, and activate the first timer, where a running duration of the first timer is a duration for performing the operation of marking the PDU Set information on the data packet.

For example, in a case that the first information includes the first indication, the second communication device may activate the operation of marking the PDU Set information on the data packet when congestion information is acquired, or in a case that the above preset condition is satisfied.

For example, in a case that the first information includes the first threshold, the second communication device may activate the operation of marking the PDU Set information on the data packet in a case that a preset condition is satisfied.

In some implementations, the above preset condition may be understood as at least one of the following: a condition locally configured by the second communication device, and congestion information reaching or exceeding the first threshold. Optionally, the above first threshold may be stipulated by a protocol, or the first information may further include the first threshold.

Optionally, the first communication device sending first information to a second communication device includes:
sending, by the first communication device, the first information to the second communication device in a case that a second condition is satisfied,
where the second condition includes at least one of the following:
   the first communication device requires the PDU Set information corresponding to the data packet;
   the operation of marking the PDU Set information on the data packet is supported;
   activating the operation of marking the PDU Set information on the data packet is allowed;
   the PDU Set processing is allowed;
   the data packet is not marked with the PDU Set information;
   the first communication device requires PDU Set information (e.g., the first communication device requires PDU Set information of a QoS flow);
   the first communication device requires to activate or activates the PDU Set processing (e.g., the first communication device requires to activate or activates the PDU Set processing on the QoS flow);
   congestion occurs; and
   the congestion information reaches or exceeds the first threshold.

In an implementation, the first operation is an operation for a first object.

Optionally, the requesting to activate the operation of marking the PDU Set information on the data packet is: requesting to activate an operation of marking PDU Set information on a data packet in a first object;
or, the activating the operation of marking the PDU Set information on the data packet is: activating the operation of marking the PDU Set information on the data packet in the first object;
or, the requiring the PDU Set information corresponding to the data packet indicates: requiring the PDU Set information corresponding to the data packet in the first object;
or, the operation of marking the PDU Set information on the data packet being supported indicates: the operation of marking the PDU Set information on the data packet in the first object being supported;
or, the allowing to activate the operation of marking the PDU Set information on the data packet indicates: allowing to activate the operation of marking the PDU Set information on the data packet in the first object;
or, the PDU Set processing being allowed indicates: PDU Set processing on the first object being allowed;
or, the data packet being not marked with the PDU Set information indicates: the data packet in the first object being not marked with the PDU Set information;
or, the first communication device requiring the PDU Set information indicates: the first communication device requiring PDU Set information of the first object;
or, the first communication device requiring to activate or activating the PDU Set processing indicates: the first communication device requiring to activate or activating PDU Set processing on the first object;
or, the congestion occurring indicates: congestion occurring on the first object;
or, the congestion information reaching or exceeding the first threshold indicates: congestion information of the first object reaching or exceeding the first threshold,
where
the first object includes at least one of the following: a QoS flow, a radio bearer, a data flow, a PDU session, and a terminal.

In an implementation, the operation of marking the PDU Set information on the data packet being supported or not supported may be understood as: for a QoS flow, the operation of marking the PDU Set information on the data packet is supported or not supported. Herein, the operation of marking the PDU Set information on the data packet being not supported includes two situations:
1. A core network device (e.g., a PSA UPF) does not support "the operation of marking the PDU Set information on the data packet".
2. The core network device has the capability of performing "the operation of marking the PDU Set information on the data packet", but the operation of marking the PDU Set information on the data packet may also be not supported. For example, due to a lack of necessary information (such as protocol description information) to perform "the operation of marking the PDU Set information on the data packet", then "the operation of marking the PDU Set information on the data packet" is not supported.

In an implementation, allowing or not allowing to activate the operation of marking the PDU Set information on the data packet may be understood as: for a QoS flow, allowing or not allowing to activate the operation of marking the PDU Set information on the data packet. Herein, not allowing to activate the operation of marking the PDU Set information on the data packet includes two situations:
1. A core network device (e.g., a PSA UPF) does not allow activating the operation of marking the PDU Set information on the data packet.
2. The core network device has the capability of "activating the operation of marking the PDU Set information on the data packet", but may also not allow activating the operation of marking the PDU Set information on the data packet. For example, due to a lack of necessary information (such as protocol description information) to perform "the operation of marking the PDU Set information on the data packet", then "activating the operation of marking the PDU Set information on the data packet is not allowed".

Optionally, in an implementation, the first operation is an operation for a first object.

In an implementation, the operation of marking the PDU Set information on the data packet being supported or not supported may be understood as: for a QoS flow, the operation of marking the PDU Set information on the data packet is supported or not supported. Herein, the operation of marking the PDU Set information on the data packet being not supported includes two situations:
1. A core network device (e.g., a PSA UPF) does not support "the operation of marking the PDU Set information on the data packet".
2. The core network device has the capability of performing "the operation of marking the PDU Set information on the data packet", but the operation of marking the PDU Set information on the data packet may also be not supported. For example, due to a lack of necessary information (such as protocol description information) to perform "the operation of marking the PDU Set information on the data packet", then "the operation of marking the PDU Set information on the data packet" is not supported.

In an implementation, allowing or not allowing to activate the operation of marking the PDU Set information on the data packet may be understood as: for a QoS flow, allowing or not allowing to activate the operation of marking the PDU Set information on the data packet. Herein, not allowing to activate the operation of marking the PDU Set information on the data packet includes two situations:
1. A core network device (e.g., a PSA UPF) does not allow activating the operation of marking the PDU Set information on the data packet.
2. The core network device has the capability of "activating the operation of marking the PDU Set information on the data packet", but may also not allow activating the operation of marking the PDU Set information on the data packet. For example, due to a lack of necessary information (such as protocol description information) to perform "the operation of marking the PDU Set information on the data packet", then "activating the operation of marking the PDU Set information on the data packet is not allowed".

In an implementation, requiring the PDU Set information corresponding to the data packet in the first object may be understood as the first communication device requiring at least one of: information related to a data packet set to which the data packet in the first object belongs, and information related to the data packet within the data packet set to which it belongs (e.g., a sequence number of the data packet in the data packet set).

In an implementation, the above radio bearer may include any one of the following: a logical channel and a data radio bearer (Data Radio Bearer, DRB).

In an implementation, a situation where the first communication device requires the PDU Set information corresponding to the data packet includes, but is not limited to, at least one of the following: congestion occurs on the first object, and congestion information of the first object reaches or exceeds the first threshold.

In an implementation, the QoS flow is a QoS flow to which the above data flow is mapped. The data flow may also be referred to as a service flow.

In an implementation, the PDU session is a PDU session to which the QoS flow belongs.

In an implementation, the terminal may be a terminal to which the QoS flow, the PDU session, or the data flow belongs.

In an implementation, the above radio bearer is a radio bearer to which the above QoS flow is mapped.

Optionally, after the first communication device performs the first operation, the method further includes:
sending, by the first communication device, at least one of the following to the second communication device: information used for indicating that the PDU Set information corresponding to the data packet is no longer required, a second request, and information used for indicating that the first information is invalid,
where
the second request is information used for requesting to stop the operation of marking the PDU Set information on the data packet.

In an implementation, the second request is a request for the first object, that is, the second request being used for requesting to stop the operation of marking the PDU Set information on the data packet may be understood as or replaced with the second request being used for requesting to stop the operation of marking the PDU Set information on the data packet in the first object.

In an implementation, stopping the operation of marking the PDU Set information on the data packet may be understood as deactivating the operation of marking the PDU Set information on the data packet, i.e., no longer performing the operation of marking the PDU Set information on the data packet.

Optionally, the first communication device sending at least one of the following to the second communication device: information used for indicating that the PDU Set information corresponding to the data packet is no longer required, a second request, and information used for indicating that the first information is invalid, includes:
sending, by the first communication device, at least one of the following to the second communication device: information used for indicating that the PDU Set information corresponding to the data packet is no longer required, a second request, and information used for indicating that the first information is invalid, in a case that a third condition is satisfied,
where the third condition includes at least one of the following:
   the first communication device no longer requires the PDU Set information corresponding to the data packet;
   the first object is no longer congested;
   congestion information of the first object falls below the first threshold or does not reach the first threshold,
   where the first object includes at least one of the following: a QoS flow, a radio bearer, a data flow, a PDU session, and a terminal.

In an implementation, the congestion information of the first object falling below the first threshold may be understood as or replaced with the congestion information of the first object being lower than the first threshold.

Herein, the congestion information may include at least one of the following: congestion level information, load information, the number of data packets marked with congestion, a proportion of data packets marked with congestion, a delay, and a waiting duration.

Optionally, before the first communication device sends the first information to the second communication device, the method further includes:
acquiring, by the first communication device, target information;
determining, by the first communication device according to the target information, to perform or not to perform the operation of sending the first information to the second communication device;
   or,
the sending, by the first communication device, first information to a second communication device includes:
   acquiring, by the first communication device, target information;
   performing, by the first communication device according to the target information, the operation of sending the first information to the second communication device,
   where
   the target information includes at least one of the following: second information, third information, and protocol description information,
   where
   the second information is used for indicating at least one of the following:
      the operation of marking the PDU Set information on the data packet is supported or not supported;
      the requesting to activate the operation of marking the PDU Set information on the data packet is allowed or not allowed;
      the PDU Set processing is allowed or not allowed;
      the data packet has been marked with the PDU Set information or has not been marked with the PDU Set information;
      where
      the third information is used for indicating at least one of the following:
         congestion occurs; and
         the congestion information reaches or exceeds the first threshold.

Optionally, the first communication device acquiring the second information includes: receiving, by the first communication device, the second information from a core network device;
or,
the acquiring, by the first communication device, the protocol description information includes: receiving, by the first communication device, the protocol description information from at least one of the core network device and a terminal.

Optionally, the operation of marking the PDU Set information on the data packet being supported or not supported indicates: the operation of marking the PDU Set information on the data packet in the first object being supported or not supported;
or, the allowing or not allowing to request to activate the operation of marking the PDU Set information on the data packet indicates: allowing or not allowing to request to activate the operation of marking the PDU Set information on the data packet in the first object;
or, the PDU Set processing being allowed or not allowed indicates: PDU Set processing on the first object being allowed or not allowed;
or, the data packet having been marked with the PDU Set information or having not been marked with the PDU Set information indicates: the data packet in the first object having been marked with the PDU Set information or having not been marked with the PDU Set information;
or, the congestion occurring indicates: congestion occurring on the first object;
or, the congestion information reaching or exceeding the first threshold indicates: congestion information of the first object reaching or exceeding the first threshold,
where the first object includes at least one of the following: a QoS flow, a radio bearer, a data flow, a PDU session, and a terminal.

In an implementation, acquiring the third information includes: obtaining, by the first communication device, the third information through detection.

In an implementation, marking the PDU Set information on the data packet includes: setting a value of the PDU Set information corresponding to the data packet at a first bit position, where the first bit position is a bit position corresponding to the PDU Set information in a first header of the data packet.

Optionally, the PDU Set information corresponding to the data packet may be PDU Set information of a PDU Set to which the data packet belongs.

For example, the PDU Set importance corresponding to the data packet is importance of the PDU Set to which the data packet belongs.

For example, the PDU Set size corresponding to the data packet is a size (Size) of the PDU Set to which the data packet belongs.

In an implementation, it is determined, through traffic detection, that a first header (a header of a first protocol) of the data packet does not contain preset information, where the preset information is used for determining PDU Set information, and the PDU Set information includes at least one of PDU Set importance and PDU Set size. The first protocol is a protocol indicated by the protocol description information.

In some implementations, the above first header may be a GPRS tunneling protocol for user plane (GPRS Tunneling Protocol for User Plane, GTP-U) header or a GTP-U extension header.

Optionally, "the operation of marking the PDU Set information on the data packet is supported" may implicitly indicate at least one of the following: the requesting to activate the operation of marking the PDU Set information on the data packet is allowed, and the PDU Set processing is allowed.

Optionally, "the requesting to activate the operation of marking the PDU Set information on the data packet is allowed" may implicitly indicate at least one of the following: the operation of marking the PDU Set information on the data packet is supported, and the PDU Set processing is allowed.

Optionally, "the PDU Set processing is allowed" may implicitly indicate at least one of the following: the operation of marking the PDU Set information on the data packet is supported, and the requesting to activate the operation of marking the PDU Set information on the data packet is allowed.

Optionally, "the operation of marking the PDU Set information on the data packet is not supported" may implicitly indicate at least one of the following: requesting to activate the operation of marking the PDU Set information on the data packet is not allowed, and PDU Set processing is not allowed.

Optionally, "requesting to activate the operation of marking the PDU Set information on the data packet is not allowed" may implicitly indicate at least one of the following: the operation of marking the PDU Set information on the data packet is not supported, and PDU Set processing is not allowed.

Optionally, "PDU Set processing is not allowed" may implicitly indicate at least one of the following: the operation of marking the PDU Set information on the data packet is not supported, and requesting to activate the operation of marking the PDU Set information on the data packet is not allowed.

In an implementation, the PDU Set processing being allowed or not allowed may indicate: allowing or not allowing the first communication device to perform PDU Set processing.

In an implementation, PDU Set processing on the first object being allowed or not allowed may indicate: allowing or not allowing the first communication device to perform PDU Set processing on the first object.

Optionally, the PDU Set processing being allowed or not allowed may include at least one of the following: downlink PDU Set processing being allowed or not allowed; uplink PDU Set processing being allowed or not allowed.

Optionally, the PDU Set processing is PDU Set processing other than PDU Set QoS processing. The PDU Set QoS processing may be an abbreviation for one of the following: processing based on a PDU Set QoS parameter, and QoS processing based on a PDU Set. The PDU Set processing may be an abbreviation for processing based on a PDU Set.

It is easy to understand that, in an implementation, the PDU Set processing does not include at least one of the following: processing based on PDU Set QoS, and applying PDU Set QoS; in another implementation, the PDU Set processing includes at least one of the following: processing based on PDU Set QoS, and applying PDU Set QoS.

Through the embodiments of this application, by sending, by the first communication device, the first information to the second communication device, in a case that the first communication device requires PDU Set information and a core network device does not mark PDU Set information, the operation of marking the PDU Set information on the data packet by the core network device may be activated, thereby enabling the first communication device to obtain PDU Set information. In this way, the embodiments of this application provide a mechanism for how to trigger activation of an operation of marking data packet set information (e.g., PDU Set information) on a data packet, improving the flexibility of marking PDU Set information. Therefore, the embodiments of this application improve the reliability of communication. For example, in a case that congestion occurs in an RAN, an operation of marking the PDU Set information on the data packet is activated, and after acquiring the PDU Set information, packet dropping may be performed based on the PDU Set information to alleviate pressure on network resources.

Please refer to FIG. 3, an embodiment of this application provides a processing method, applied to a second communication device. The second communication device includes, but is not limited to, a core network device (including but not limited to one of the following: an AF, a session management function, and a policy control function). The method includes the following step:

In step 31, a second communication device performs a second operation. The performing a second operation includes at least one of the following:
sending, to a first communication device, at least one of second information and protocol description information, where the second information is used for indicating at least one of the following: an operation of marking PDU Set information on a data packet is supported or not supported; requesting to activate the operation of marking the PDU Set information on the data packet is allowed or not allowed; PDU Set processing is allowed or not allowed; the data packet has been marked with the PDU Set information or has not been marked with the PDU Set information;
requesting a third communication device to activate the operation of marking the PDU Set information on the data packet, or requesting the third communication device to deactivate the operation of marking the PDU Set information on the data packet;
performing a first sub-operation;
performing a second sub-operation,
where
performing the first sub-operation includes at least one of the following:
   acquiring fourth information, including at least one of the following: first information, a validity duration of the first information, and protocol description information;
   performing, according to the fourth information, at least one of the following:
      accepting or rejecting the first information;
      sending an activation result to the first communication device;
      storing the first information;
      starting a first timing, where the first timing is a timing according to a first duration, and the first duration is a duration of the operation of marking the PDU Set information on the data packet, or starting timing of a first timer, where the first timer is a timer for the operation of marking the PDU Set information on the data packet;
      starting a second timing, where the second timing is a timing according to a validity duration of the first information, or starting timing of a second timer, where the second timer is a timer for validity of the first information;
      requesting the third communication device to activate the operation of marking the PDU Set information on the data packet;
      sending sixth information to the third communication device, where the sixth information includes at least one of the following: a first request, a first duration, a first timer, a first indication, and a first threshold;
      where
      performing the second sub-operation includes at least one of the following:
         acquiring fifth information, including at least one of the following: information used for indicating that the PDU Set information corresponding to the data packet is no longer required; a second request; information used for indicating that the first information is invalid; seventh information, where the seventh information is used for indicating one of the following: a terminal undergoes an inter-RAN transfer or transfers from the first communication device to another communication device, a PDU session QoS flow undergoes an inter-RAN transfer or transfers from the first communication device to another communication device, and a QoS flow undergoes an inter-RAN transfer or transfers from the first communication device to another communication device;
         performing, according to the fifth information, at least one of the following:
            deleting the first information;
            accepting or rejecting the second request in a case that the fifth information includes the second request;
            sending a deactivation result to the first communication device;
            stopping a first timing, where the first timing is a timing according to a first duration; or stopping timing of a first timer, where the first timer is a timer for the operation of marking the PDU Set information on the data packet;
            stopping a second timing, where the second timing is a timing according to a validity duration of the first information; or stopping timing of a second timer, where the second timer is a timer for validity of the first information;
            requesting the third communication device to deactivate the operation of marking the PDU Set information on the data packet;
            sending, to the third communication device, information used for indicating that the sixth information is invalid;
            where
            the first information includes at least one of the following: information used for indicating that PDU Set information corresponding to a data packet is required, a first request, a first duration, a first timer, a first indication, and a first threshold;
            the first request is information used for requesting to activate the operation of marking the PDU Set information on the data packet;
            the second request is information used for requesting to stop the operation of marking the PDU Set information on the data packet;
            the first duration is a duration of the operation of marking the PDU Set information on the data packet;
            the first timer is a timer for the operation of marking the PDU Set information on the data packet;
            the second timer is a timer for validity of the first information;
            the first indication is used for indicating to activate the operation of marking the PDU Set information on the data packet in a case that a first condition is satisfied; and the satisfying a first condition includes at least one of the following: congestion information is acquired, and the congestion information reaches or exceeds the first threshold.

Optionally, "the operation of marking the PDU Set information on the data packet is supported" may implicitly indicate at least one of the following: the requesting to activate the operation of marking the PDU Set information on the data packet is allowed, and the PDU Set processing is allowed.

Optionally, "the requesting to activate the operation of marking the PDU Set information on the data packet is allowed" may implicitly indicate at least one of the following: the operation of marking the PDU Set information on the data packet is supported, and the PDU Set processing is allowed.

Optionally, "the PDU Set processing is allowed" may implicitly indicate at least one of the following: the operation of marking the PDU Set information on the data packet is supported, and the requesting to activate the operation of marking the PDU Set information on the data packet is allowed.

Optionally, "the operation of marking the PDU Set information on the data packet is not supported" may implicitly indicate at least one of the following: requesting to activate the operation of marking the PDU Set information on the data packet is not allowed, and PDU Set processing is not allowed.

Optionally, "requesting to activate the operation of marking the PDU Set information on the data packet is not allowed" may implicitly indicate at least one of the following: the operation of marking the PDU Set information on the data packet is not supported, and PDU Set processing is not allowed.

Optionally, "PDU Set processing is not allowed" may implicitly indicate at least one of the following: the operation of marking the PDU Set information on the data packet is not supported, and requesting to activate the operation of marking the PDU Set information on the data packet is not allowed.

In an implementation, the first threshold is used for a second communication device to activate the operation of marking the PDU Set information on the data packet in a case that congestion information reaches or exceeds the first threshold.

In an implementation, the protocol description information may be used for determining at least one of PDU Set information of a data packet set and data burst (data burst) information. For example, the protocol description information includes a protocol used for describing a data flow, and a protocol header of the protocol can provide relevant information for determining PDU Set information of a data packet set to which the data packet belongs. Optionally, the protocol includes, but is not limited to, at least one of the following: real-time transport protocol (Real-time Transport Protocol, RTP), secure real time protocol (Secure Real Time Protocol, SRTP), moving pictures expert group (Moving Pictures Expert Group, MPEG), etc. Optionally, the MPEG standard is also referred to as a standard of the digital video/audio coding and compression.

In an implementation, the third communication device includes a UPF (such as an anchor gateway, e.g., a PDU session anchor (PDU Session Anchor, PSA) UPF).

In an implementation, the activation result includes accepting or rejecting the first information. For example, in a case that the operation of marking the PDU Set information on the data packet is not supported or requesting to activate the operation of marking the PDU Set information on the data packet is not allowed, the activation result may be rejecting the first information.

In an implementation, the deactivation result includes accepting or rejecting the second request.

Optionally, in a case that the first sub-operation includes sending the sixth information to the third communication device, the first sub-operation further includes: sending, to the third communication device, one of the following: a validity duration of the sixth information, and a third timer,
where the third timer is a timer for validity of the sixth information.

Optionally, the sending, to a first communication device, at least one of second information and protocol description information includes: determining to send at least one of the second information and the protocol description information to the first communication device according to at least one of an operator policy, protocol description information, the third communication device supporting the operation of marking the PDU Set information on the data packet, the operation of marking the PDU Set information on the data packet being supported, requesting to activate the operation of marking the PDU Set information on the data packet being allowed, the PDU Set processing being allowed, the data packet being not marked with the PDU Set information, a PDU Set QoS parameter not existing, and first information.

Optionally, the second information is sent to the first communication device in a case that a fourth condition is satisfied,
where the fourth condition includes at least one of the following:
protocol description information corresponding to the first object exists, where the first object includes at least one of the following: a QoS flow, a radio bearer, a data flow, a PDU session, and a terminal;
the third communication device supports the operation of marking the PDU Set information on the data packet;
the operation of marking the PDU Set information on the data packet is supported (e.g., the operation of marking the PDU Set information on the data packet in the first object is supported);
the requesting to activate the operation of marking the PDU Set information on the data packet is allowed (e.g., requesting to activate the operation of marking the PDU Set information on the data packet in the first object is allowed;
the PDU Set processing is allowed (e.g., PDU Set processing on the first object is allowed);
the data packet is not marked with the PDU Set information (e.g., the data packet in the first object is not marked with the PDU Set information);
a PDU Set QoS parameter (e.g., a DL PDU Set QoS parameter does not exist (e.g., a DL PDU Set QoS parameter of the first object does not exist) (e.g., a PDU Set QoS parameter of the first object does not exist);
the first information is acquired;
the second information is acquired.

Optionally, the requesting the third communication device to activate the operation of marking the PDU Set information on the data packet includes: requesting the third communication device to activate the operation of marking the PDU Set information on the data packet in a case that a fifth condition is satisfied,
where the fifth condition includes at least one of the following:
the protocol description information exists;
the operation of marking the PDU Set information on the data packet is supported;
the requesting to activate the operation of marking the PDU Set information on the data packet is allowed;
the PDU Set processing is allowed;
the data packet is not marked with the PDU Set information;
the first information is acquired;
the first timing does not expire, or the first timer does not expire, where the first timing is a timing according to a first duration; the first timer is a timer for the operation of marking the PDU Set information on the data packet;
the first information is valid or is within a validity duration of the first information; and
the second timing does not expire, or the second timer does not expire, where the second timing is a timing according to the validity duration of the first information, and the second timer is a timer for validity of the first information.

Optionally, the operation of marking the PDU Set information on the data packet indicates: an operation of marking PDU Set information on a data packet in a first object;
or, the protocol description information existing indicates: the protocol description information corresponding to the first object existing;
or, the operation of marking the PDU Set information on the data packet being supported indicates: the operation of marking the PDU Set information on the data packet in the first object being supported;
or, the requesting to activate the operation of marking the PDU Set information on the data packet being allowed indicates: requesting to activate the operation of marking the PDU Set information on the data packet in the first object being allowed;
or, the PDU Set processing being allowed indicates: PDU Set processing on the first object being allowed;
or, the data packet being not marked with the PDU Set information indicates: the data packet in the first object being not marked with the PDU Set information;
or, the first information indicates: first information corresponding to the first object;
or, the second timer not expiring indicates: a second timer corresponding to the first object not expiring;
or, the first timing or the first timer not expiring indicates: a first timing or a first timer corresponding to the first object not expiring,
where
the first object includes at least one of the following: a QoS flow, a radio bearer, a data flow, a PDU session, and a terminal.

Optionally, requesting the third communication device to deactivate the operation of marking the PDU Set information on the data packet, and/or deleting the first information includes: requesting the third communication device to deactivate the operation of marking the PDU Set information on the data packet, and/or deleting the first information in a case that a sixth condition is satisfied,
where the sixth condition includes at least one of the following:
the operation of marking the PDU Set information on the data packet is requested to be activated by a source RAN device of a handover;
a terminal undergoes an inter-RAN transfer or transfers from the first communication device to another communication device;
a QoS flow undergoes an inter-RAN transfer or transfers from the first communication device to another communication device;
a PDU session undergoes an inter-RAN transfer or transfers from the first communication device to another communication device;
the first timing expires, or the first timer expires, where the first timing is a timing according to a first duration; the first timer is a timer for the operation of marking the PDU Set information on the data packet;
the first information is invalid or is deleted;
the second timing expires, or the second timer expires, where the second timing is a timing according to a validity duration of the first information, the second timer is a timer for validity of the first information;
one of the following is obtained: a second request, information used for indicating that the PDU Set information corresponding to the data packet is no longer required, and information used for indicating that the first information is invalid.

In an implementation, the first information being invalid or being deleted includes: the first information being invalid or being deleted due to receiving information used for indicating that the first information is invalid, or the first information being invalid or being deleted due to expiration of timing according to a validity duration of the first information.

In an implementation, the first communication device (e.g., a source base station) sends the first information to the second communication device, so that the operation of marking the PDU Set information on the data packet is activated. In a case that a terminal or a QoS flow is handed over from the first communication device to another communication device, the second communication device may request the third communication device to deactivate the operation of marking the PDU Set information on the data packet, and/or delete the first information.

Transfer includes handover. For example, an inter-RAN transfer includes an inter-RAN handover.

Optionally, the operation of marking the PDU Set information on the data packet indicates: an operation of marking PDU Set information on a data packet in a first object;
or, the second request indicates: a second request corresponding to the first object;
or, the information used for indicating that the PDU Set information corresponding to the data packet is no longer required indicates: information used for indicating that the PDU Set information corresponding to the data packet in the first object is no longer required;
or, the first information being invalid indicates: first information corresponding to the first object being invalid;
or, the first timing expiring indicates: a first timing corresponding to the first object expiring;
or, the first timer expiring indicates: a first timer corresponding to the first object expiring;
or, the second timing expiring indicates: a second timing corresponding to the first object expiring;
or, the second timer expiring indicates: a second timer corresponding to the first object expiring,
where
the first object includes at least one of the following: a QoS flow, a radio bearer, a data flow, a PDU session, and a terminal.

Optionally, the operation of marking the PDU Set information on the data packet includes: an operation of marking PDU Set information on a data packet in a first object;
where the first object includes at least one of the following: a QoS flow, a radio bearer, a data flow, a PDU session, and a terminal.

In an implementation, a terminal undergoing an inter-RAN transfer may be a terminal undergoing an inter-RAN handover.

In an implementation, the PDU Set processing being allowed or not allowed may indicate: allowing or not allowing the first communication device to perform PDU Set processing.

In an implementation, PDU Set processing on the first object being allowed or not allowed may indicate: allowing or not allowing the first communication device to perform PDU Set processing on the first object.

Optionally, the PDU Set processing being allowed or not allowed may include at least one of the following: downlink PDU Set processing being allowed or not allowed; uplink PDU Set processing being allowed or not allowed.

Optionally, the PDU Set processing is PDU Set processing other than PDU Set QoS processing. The PDU Set QoS processing may be an abbreviation for one of the following: processing based on a PDU Set QoS parameter, and QoS processing based on a PDU Set. The PDU Set processing may be an abbreviation for processing based on a PDU Set.

It is easy to understand that, in an implementation, the PDU Set processing does not include at least one of the following: processing based on PDU Set QoS, and applying PDU Set QoS; in another implementation, the PDU Set processing includes at least one of the following: processing based on PDU Set QoS, and applying PDU Set QoS.

Through the embodiments of this application, in a case that the first communication device requires PDU Set information and a core network device does not mark PDU Set information, the operation of marking the PDU Set information on the data packet by the core network device may be activated, thereby enabling the first communication device to obtain PDU Set information. In this way, the embodiments of this application provide a mechanism for how to trigger activation of an operation of marking data packet set information (e.g., PDU Set information) on a data packet, improving the flexibility of marking PDU Set information. Therefore, the embodiments of this application improve the reliability of communication and optimize the communication process.

Please refer to FIG. 4, an embodiment of this application provides a processing method, applied to a third communication device. The third communication device includes, but is not limited to, a core network device (including but not limited to a user plane function or a gateway, such as a UPF (e.g., a PSA UPF)). The method includes the following step:

In step 41, a third communication device performs a third operation. The performing a third operation includes:
acquiring eighth information, where the eighth information includes at least one of sixth information and congestion information, where the sixth information includes at least one of the following: a first request, a first duration, a first timer, a first indication, and a first threshold;
performing, according to the eighth information, at least one of the following:
   activating an operation of marking the PDU Set information on the data packet or deactivating the operation of marking the PDU Set information on the data packet;
   accepting or rejecting the sixth information;
   starting a first timing, where the first timing is a timing according to a first duration, or starting timing of a first timer, where the first timer is a timer for the operation of marking the PDU Set information on the data packet;
   starting a third timing, where the third timing is a timing according to a validity duration of the sixth information, or starting timing of a third timer, where the third timer is a timer for validity of the sixth information,
   where
   the first request is information used for requesting to activate the operation of marking the PDU Set information on the data packet;
   the first duration is a duration of the operation of marking the PDU Set information on the data packet;
   the first indication is used for indicating to activate the operation of marking the PDU Set information on the data packet in a case that a first condition is satisfied; and the first condition includes at least one of the following: congestion information is acquired, and the congestion information reaches or exceeds the first threshold.

In an implementation, the first threshold is used for a second communication device to activate the operation of marking the PDU Set information on the data packet in a case that congestion information reaches or exceeds the first threshold.

In an implementation, the third communication device may acquire at least one of sixth information and congestion information from the second communication device.

In an implementation, the sixth information is sixth information corresponding to a QoS flow.

Optionally, after the third communication device performs the third operation, the method further includes:
acquiring, by the third communication device, information used for indicating that the sixth information is invalid;
performing, by the third communication device according to the information used for indicating that the sixth information is invalid, at least one of the following:
   deleting the stored sixth information;
   stopping the first timing, or stopping the first timer, where the first timing is a timing according to a first duration;
   stopping the third timing, or stopping the third timer; and
   deactivating the operation of marking the PDU Set information on the data packet.

Optionally, acquiring sixth information includes: receiving the sixth information from a second communication device;
or
acquiring congestion information includes: acquiring the congestion information from a received data packet, or receiving the congestion information from a second communication device.

In an implementation, acquiring the congestion information from a received data packet includes: acquiring, by the third communication device, the congestion information from a header of a received uplink data packet (e.g., a GTP-U header (e.g., a GTP-U extension header)).

Optionally, the third communication device performs activating the operation of marking the PDU Set information on the data packet in a case that a seventh condition is satisfied,
where the seventh condition includes at least one of the following:
protocol description information exists, or protocol description information of a data flow corresponding to the data packet exists;
the operation of marking the PDU Set on the data packet is supported;
the data packet is not marked with the PDU Set information;
the sixth information is acquired, where the sixth information includes at least one of the following: a first request, a first duration, a first timer, a first indication, and a first threshold;
the first timing does not expire, or the first timer does not expire, where the first timing is a timing according to a first duration; the first timer is a timer for the operation of marking the PDU Set information on the data packet;
the sixth information is valid or is within a validity duration of the sixth information;
the third timing does not expire, or the third timer does not expire, where the third timing is a timing according to the validity duration of the sixth information, and the third timer is a timer for validity of the sixth information;
congestion occurs; and
the congestion information reaches or exceeds the first threshold.

Optionally, the operation of marking the PDU Set information on the data packet indicates: an operation of marking PDU Set information on a data packet in a first object;
or, the protocol description information existing indicates: the protocol description information corresponding to the first object existing;
or, the operation of marking the PDU Set on the data packet being supported or not supported indicates: the operation of marking the PDU Set information on the data packet in the first object being supported;
or, the data packet being not marked with the PDU Set information indicates: the data packet in the first object being not marked with the PDU Set information;
or, the first request indicates: a first request corresponding to the first object;
or, the first duration indicates: a first duration corresponding to the first object;
or, the first indication indicates: a first indication corresponding to the first object;
or, the first threshold indicates: a first threshold corresponding to the first object;
or, the congestion occurring indicates: congestion occurring on the first object;
or, the congestion information reaching or exceeding the first threshold indicates: congestion information of the first object reaching or exceeding the first threshold;
or, the first timing not expiring indicates: a first timing corresponding to the first object not expiring;
or, the first timer not expiring indicates: a first timer corresponding to the first object not expiring;
or, the third timing not expiring indicates: a third timing corresponding to the first object not expiring;
or, the third timer not expiring indicates: a third timer corresponding to the first object not expiring.

In an implementation, protocol description information corresponding to a first object existing means that protocol description information corresponding to a data flow in the first object exists; the protocol description information may be sent by a third party or locally configured in the second communication device.

Optionally, the third communication device performs stopping the operation of marking the PDU Set information on the data packet in a case that an eighth condition is satisfied,
where the eighth condition includes at least one of the following:
a second request is acquired;
the first timing expires, or the first timer expires, where the first timing is a timing according to a first duration, and the first timer is a timer for the operation of marking the PDU Set information on the data packet;
the sixth information is invalid or is deleted;
the third timing expires, or the third timer expires, where the third timing is a timing according to a validity duration of the sixth information, and the third timer is a timer for validity of the sixth information;
an indication that the sixth information is invalid is obtained;
congestion information is no longer received or congestion no longer occurs;
congestion information falls below the first threshold.

Optionally, stopping the operation of marking the PDU Set information on the data packet indicates: stopping an operation of marking PDU Set information on a data packet in a first object;
the second request indicates: a second request corresponding to the first object;
the first timing expiring indicates: a first timing corresponding to the first object expiring;
the first timer expiring indicates: a first timer corresponding to the first object expiring;
the third timing expiring indicates: a third timing corresponding to the first object expiring;
the third timer expiring indicates: a third timer corresponding to the first object expiring;
the sixth information indicates: sixth information corresponding to the first object;
the congestion information no longer being received or the congestion no longer occurring indicates: congestion information corresponding to the first object no longer being received or the first object no longer being congested;
the congestion information falling below the first threshold indicates: congestion information corresponding to the first object falling below the first threshold.

Optionally, in a case that the eighth information includes the sixth information, the eighth information further includes at least one of the following: a validity duration of the sixth information and a third timer.

In an implementation, acquiring at least one of the validity durations of the sixth information and the third timer includes: receiving, from the second communication device, at least one of the validity durations of the sixth information and the third timer.

Optionally, the operation of marking the PDU Set information on the data packet includes: an operation of marking PDU Set information on a data packet in a first object;
where the first object includes at least one of the following: a QoS flow, a radio bearer, a data flow, a PDU session, and a terminal.

Through the embodiments of this application, in a case that the first communication device requires PDU Set information and a core network device does not mark PDU Set information, the operation of marking the PDU Set information on the data packet by the core network device may be activated, thereby enabling the first communication device to obtain PDU Set information. In this way, the embodiments of this application provide a mechanism for how to trigger activation of an operation of marking data packet set information (e.g., PDU Set information) on a data packet, improving the flexibility of marking PDU Set information. Therefore, the embodiments of this application improve the reliability of communication and optimize the communication process.

### Embodiment 1 of this application

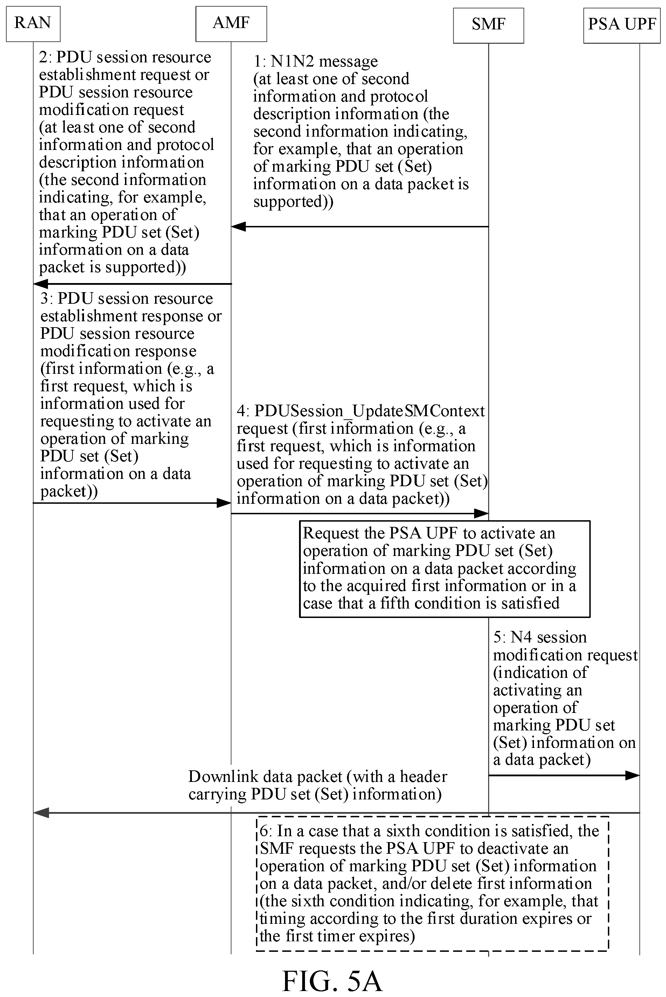

Please refer to FIG. 5A. Embodiment 1 of this application includes the following steps:
In step 1: an SMF sends an N1N2 message to an AMF. Optionally, the N1N2 message includes at least one of second information and protocol description information. Herein, the second information is used for indicating at least one of the following: an operation of marking PDU Set information on a data packet in a QoS flow is supported or not supported; activating the operation of marking the PDU Set information on the data packet in the QoS flow is allowed or not allowed; PDU Set processing is allowed or not allowed; the data packet in the QoS flow has been marked with the PDU Set information or has not been marked with the PDU Set information.
In step 2, the AMF sends a PDU session resource establishment request or a PDU session resource modification request to an RAN. Optionally, the PDU session resource establishment request or the PDU session resource modification request includes at least one of the above second information and protocol description information.
In step 3, the RAN sends a PDU session resource establishment response or a PDU session resource modification response to the AMF. Optionally, the PDU session resource establishment response or the PDU session resource modification response includes first information. The first information includes at least one of the following: a first request, a first duration, a first timer, a first indication, and a first threshold.

Optionally, in a case that a second condition is satisfied, the PDU session resource establishment response or the PDU session resource modification response sent by the RAN includes the first information. The first information may be first information corresponding to a QoS flow.

Herein, the second condition includes at least one of the following:
the first communication device requires the PDU Set information corresponding to the data packet in the QoS flow;
the operation of marking the PDU Set information on the data packet in the QoS flow is supported;
activating the operation of marking the PDU Set information on the data packet in the QoS flow is allowed;
PDU Set processing in the QoS flow is allowed;
the data packet in the QoS flow is not marked with the PDU Set information;
the first communication device requires PDU Set information of the QoS flow;
the first communication device requires to activate or activates the PDU Set processing of the QoS flow;
congestion occurs in the QoS flow;
QoS flow congestion information reaches or exceeds the first threshold.

In step 4, the AMF sends a PDU session update request (e.g., a PDUSession_UpdateSMContext request) to the SMF. Optionally, the PDU session update request includes the above first information.

In this embodiment of this application, the SMF may, according to the acquired first information or when a fifth condition is satisfied, request the PSA UPF to activate the operation of marking the PDU Set information on the data packet, so as to perform step 5.

In step 5, the SMF sends an N4 session modification request to a PSA UPF. Optionally, the N4 session modification request includes an indication of activating the operation of marking the PDU Set information on the data packet of the QoS flow.

After receiving the N4 session modification request, the SMF may activate the operation of marking the PDU Set information on the data packet of the QoS flow. The SMF includes PDU Set information in a header of a sent downlink data packet of the QoS flow.

In step 6, optionally, in a case that a sixth condition is satisfied, the SMF may request the PSA UPF to deactivate the operation of marking the PDU Set information on the data packet of the QoS flow, and/or delete the first information.

Herein, the sixth condition is that, for example, timing according to the first duration expires or the first timer expires.

### Embodiment 2 of this application

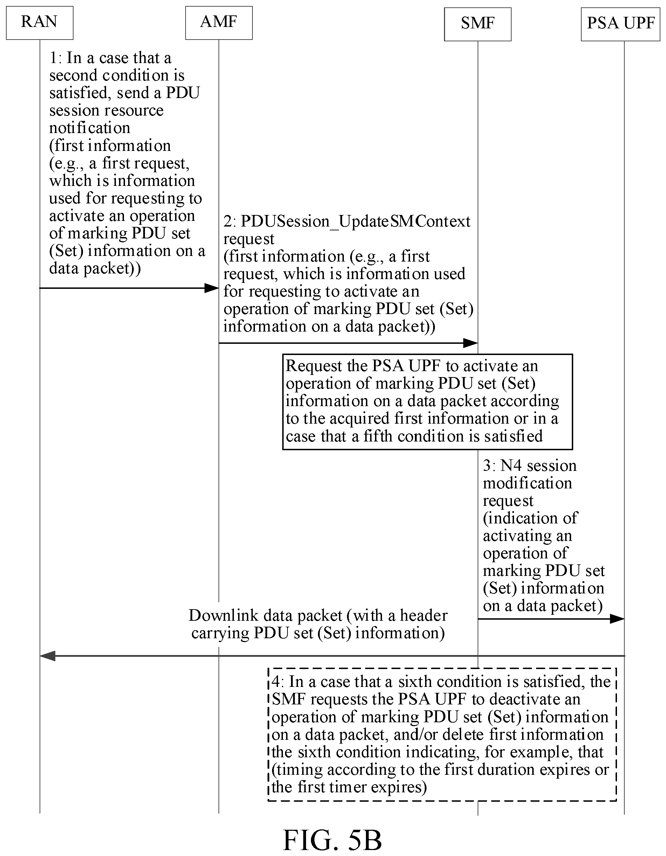

Please refer to FIG. 5B. Embodiment 2 of this application includes the following steps:
In step 1, the RAN sends a PDU session resource notification message to the AMF. Optionally, the PDU session resource notification message includes first information; the first information may be first information corresponding to the QoS flow. Optionally, in a case that a second condition is satisfied, the RAN sends the PDU session resource notification message. Optionally, the PDU session resource notification message includes the first information.

Herein, the second condition includes at least one of the following:
the first communication device requires the PDU Set information corresponding to the data packet in the QoS flow;
the operation of marking the PDU Set information on the data packet in the QoS flow is supported;
activating the operation of marking the PDU Set information on the data packet in the QoS flow is allowed;
PDU Set processing in the QoS flow is allowed;
the data packet in the QoS flow is not marked with the PDU Set information;
the first communication device requires PDU Set information of the QoS flow;
the first communication device requires to activate or activates the PDU Set processing of the QoS flow;
congestion occurs in the QoS flow;
QoS flow congestion information reaches or exceeds the first threshold.

Optionally, the first information includes at least one of the following: the first information includes at least one of the following: information used for indicating that PDU Set information corresponding to a data packet is required, a first request, a first duration, a first timer, a first indication, and a first threshold.

In step 2, the AMF sends a PDU session update request (e.g., a PDUSession_UpdateSMContext request) to the SMF. Optionally, the PDU session update request includes the above first information. The first information is first information corresponding to the QoS flow.

In this embodiment of this application, the SMF may, according to the acquired first information or when a fifth condition is satisfied, request the PSA UPF to activate the operation of marking the PDU Set information on the data packet, so as to perform step 3.

In step 3, the SMF sends an N4 session modification request to a PSA UPF. Optionally, the N4 session modification request includes an indication of activating the operation of marking the PDU Set information on the data packet of the QoS flow.

In step 4, optionally, in a case that a sixth condition is satisfied, the SMF may request the PSA UPF to deactivate the operation of marking the PDU Set information on the data packet of the QoS flow, and/or delete the first information.

Herein, the sixth condition is that, for example, timing according to the first duration expires or the first timer expires.

Herein, steps 3 to 4 are the same as steps 5 and 6 in the above Embodiment 1, and reference may be made to the description of the above Embodiment 1 for details, which will not be repeated here.

### Embodiment 3 of this application

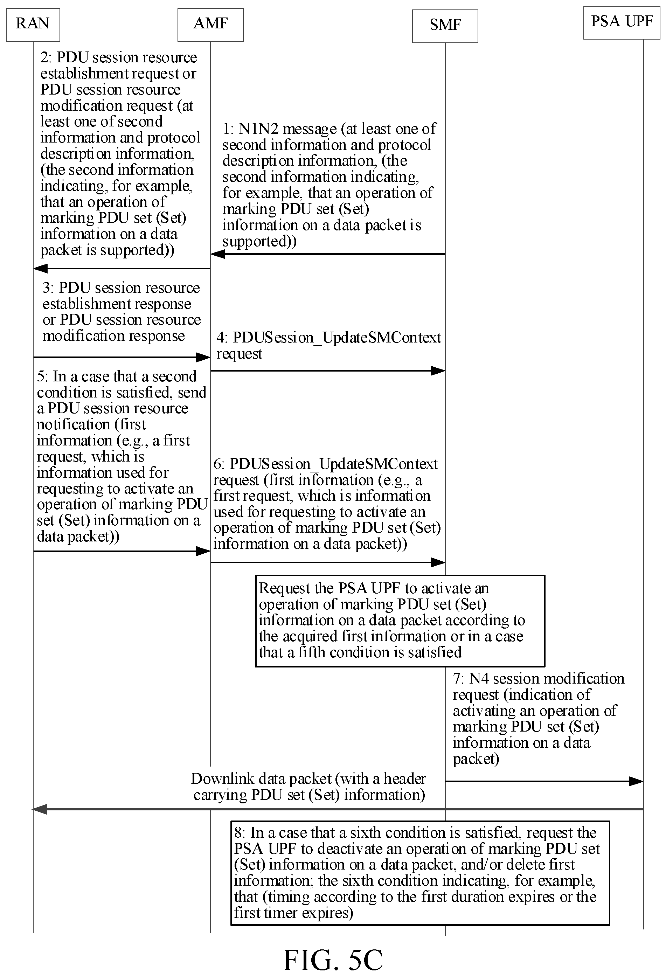

Please refer to FIG. 5C. Embodiment 3 of this application includes the following steps:
In step 1, an SMF sends an N1N2 message to an AMF, where the N1N2 message includes at least one of second information and protocol description information, where the second information is used for indicating at least one of the following: an operation of marking PDU Set information on a data packet in a QoS flow is supported or not supported; activating the operation of marking the PDU Set information on the data packet in the QoS flow is allowed or not allowed; PDU Set processing is allowed or not allowed; the data packet in the QoS flow has been marked with the PDU Set information or has not been marked with the PDU Set information.
In step 2, the AMF sends a PDU session resource establishment request or a PDU session resource modification request to an RAN. Optionally, the PDU session resource establishment request or the PDU session resource modification request includes at least one of the above second information and protocol description information.
In step 3, the RAN sends a PDU session resource establishment response or a PDU session resource modification response to the AMF.
In step 4, the AMF sends a PDU session update request (e.g., a PDUSession_UpdateSMContext request) to the SMF.
In step 5, in a case that a second condition is satisfied, the RAN sends the PDU session resource notification message to the AMF. Optionally, the PDU session resource notification message includes first information; the first information may be first information corresponding to the QoS flow.

Herein, the second condition includes at least one of the following:
the first communication device requires the PDU Set information corresponding to the data packet in the QoS flow;
the operation of marking the PDU Set information on the data packet in the QoS flow is supported;
activating the operation of marking the PDU Set information on the data packet in the QoS flow is allowed;
PDU Set processing in the QoS flow is allowed;
the data packet in the QoS flow is not marked with the PDU Set information;
the first communication device requires PDU Set information of the QoS flow;
the first communication device requires to activate or activates the PDU Set processing of the QoS flow;
congestion occurs in the QoS flow;
QoS flow congestion information reaches or exceeds the first threshold.

Optionally, the first information includes at least one of the following: the first information includes at least one of the following: information used for indicating that PDU Set information corresponding to a data packet is required, a first request, a first duration, a first timer, a first indication, and a first threshold.

In step 6, the AMF sends a PDU session update request (e.g., a PDUSession_UpdateSMContext request) to the SMF. Optionally, the PDU session update request includes the above first information.

Subsequent steps are the same as those in Embodiment 1, and reference may be made to the description of steps 5 and 6 in Embodiment 1 for details, which will not be repeated here.

### Embodiment 4 of this application

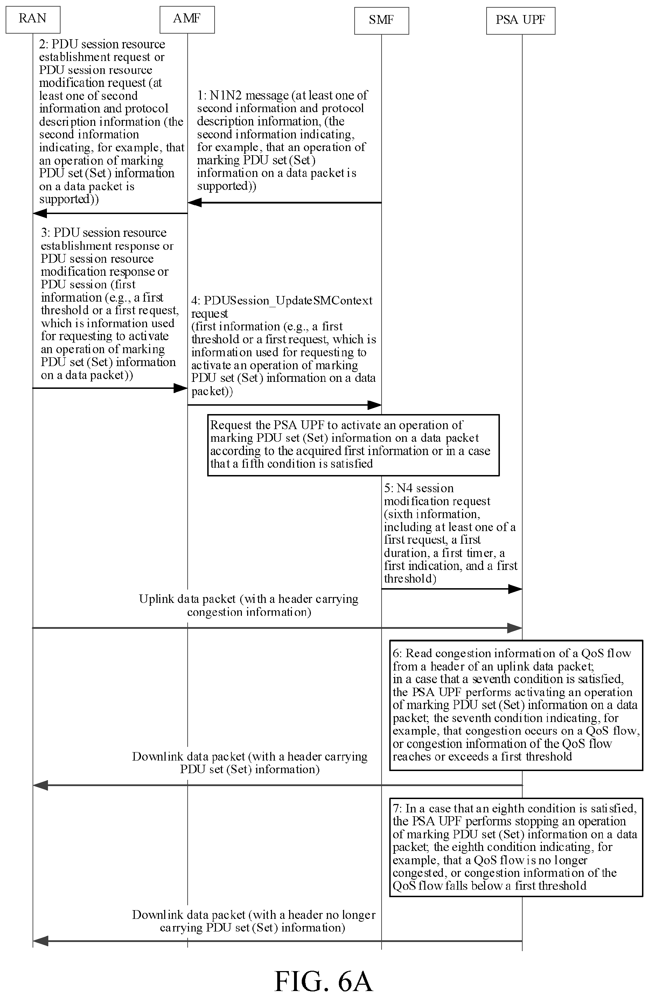

Please refer to FIG. 6A. Embodiment 4 of this application includes the following steps:
In step 1: an SMF sends an N1N2 message to an AMF. Optionally, the N1N2 message includes at least one of second information and protocol description information, where the second information is used for indicating at least one of the following: an operation of marking PDU Set information on a data packet in a QoS flow is supported or not supported; activating the operation of marking the PDU Set information on the data packet in the QoS flow is allowed or not allowed; PDU Set processing is allowed or not allowed; the data packet in the QoS flow has been marked with the PDU Set information or has not been marked with the PDU Set information.
In step 2, the AMF sends a PDU session resource establishment request or a PDU session resource modification request to an RAN. Optionally, the PDU session resource establishment request or the PDU session resource modification request includes at least one of the above second information and protocol description information.
In step 3, the RAN sends a PDU session resource establishment response or a PDU session resource modification response to the AMF. Optionally, the PDU session resource establishment response or the PDU session resource modification response includes first information. The first information includes at least one of the following: information used for indicating that PDU Set information corresponding to a data packet is required, a first request, a first duration, a first timer, a first indication, and a first threshold. The first information may be first information corresponding to a QoS flow. In step 4, the AMF sends a PDU session update request (e.g., a PDUSession_UpdateSMContext request) to the SMF. Optionally, the PDU session update request includes the above first information.

In this embodiment of this application, the SMF may, according to the acquired first information or when a fifth condition is satisfied, request the PSA UPF to activate the operation of marking the PDU Set information on the data packet, so as to perform step 5.

In step 5, the SMF sends an N4 session modification request to a PSA UPF. Optionally, the N4 session modification request includes sixth information, where the sixth information includes at least one of the following: a first request, a first duration, a first timer, a first indication, and a first threshold. The sixth information may be first information corresponding to a QoS flow.

In step 6, the PSA UPF reads congestion information of the QoS flow from a header of an uplink data packet; the PSA UPF performs activating the operation of marking the PDU Set information on the data packet of the QoS flow in a case that a seventh condition is satisfied.

Herein, the seventh condition is, for example: congestion occurs on the QoS flow, or congestion information of the QoS flow reaches or exceeds a first threshold.

In step 7, optionally, the PSA UPF performs stopping the operation of marking the PDU Set information on the data packet in a case that an eighth condition is satisfied.

Herein, the eighth condition is, for example: the QoS flow is no longer congested, or congestion information of the QoS flow falls below the first threshold.

### Embodiment 5 of this application

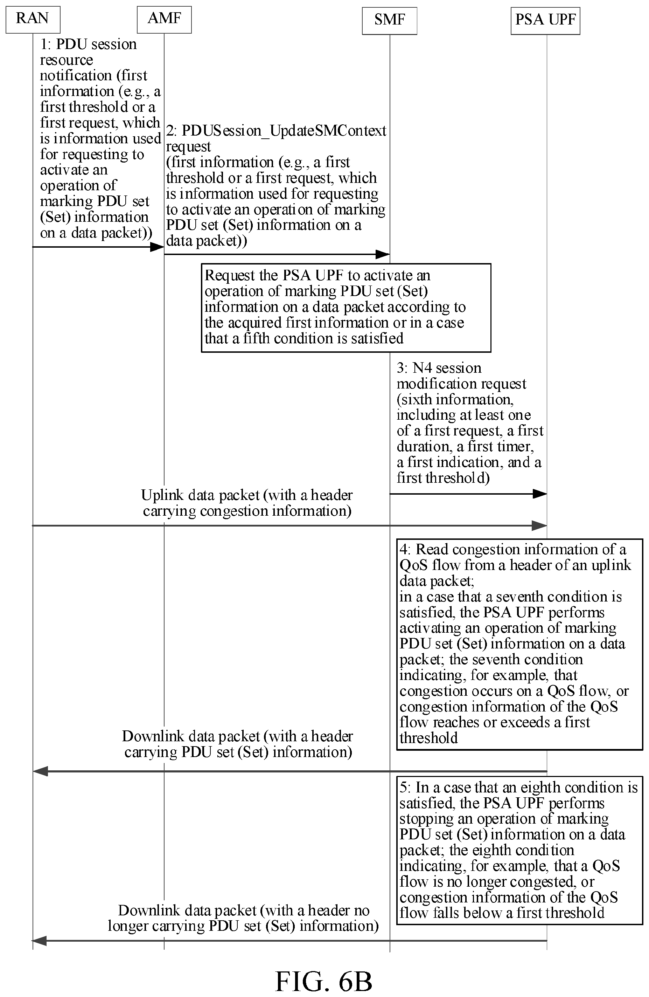

Please refer to FIG. 6B. Embodiment 5 of this application includes the following steps:
In step 1, an RAN sends a PDU session resource notification message to an AMF. Optionally, the PDU session resource notification message includes first information. For example, the first information includes a first request, and the first request is information used for requesting to activate the operation of marking the PDU Set information on the data packet.

Optionally, in a case that a second condition is satisfied, the RAN performs at least one of the following: sending a PDU session resource notification message to the AMF, and sending first information, where the PDU session resource notification message includes the first information.

Herein, the second condition includes at least one of the following:
the first communication device requires the PDU Set information corresponding to the data packet in the QoS flow;
the operation of marking the PDU Set information on the data packet in the QoS flow is supported;
activating the operation of marking the PDU Set information on the data packet in the QoS flow is allowed;
PDU Set processing in the QoS flow is allowed;
the data packet in the QoS flow is not marked with the PDU Set information;
the first communication device requires PDU Set information of the QoS flow;
the first communication device requires to activate or activates the PDU Set processing of the QoS flow;
congestion occurs in the QoS flow;
QoS flow congestion information reaches or exceeds the first threshold.

In step 2, the AMF sends a PDU session update request (e.g., a PDUSession_UpdateSMContext request) to the SMF. Optionally, the PDU session update request includes the above first information.

In this embodiment of this application, the SMF may, according to the acquired first information or when a fifth condition is satisfied, request the PSA UPF to activate the operation of marking the PDU Set information on the data packet of the QoS flow, so as to perform step 3.

In step 3, the SMF sends an N4 session modification request to a PSA UPF. Optionally, the N4 session modification request includes sixth information, where the sixth information includes at least one of the following: a first request, a first duration, a first timer, a first indication, and a first threshold. The first information may be first information corresponding to a QoS flow.

In step 4, the PSA UPF reads congestion information of the QoS flow from a header of an uplink data packet; the PSA UPF performs activating the operation of marking the PDU Set information on the data packet in a case that a seventh condition is satisfied.

Herein, the seventh condition is, for example: congestion occurs on the QoS flow, or congestion information of the QoS flow reaches or exceeds a first threshold.

In step 5, optionally, the PSA UPF performs stopping the operation of marking the PDU Set information on the data packet in a case that an eighth condition is satisfied.

Herein, the eighth condition is, for example: the QoS flow is no longer congested, or congestion information of the QoS flow falls below the first threshold.

### Embodiment 6 of this application

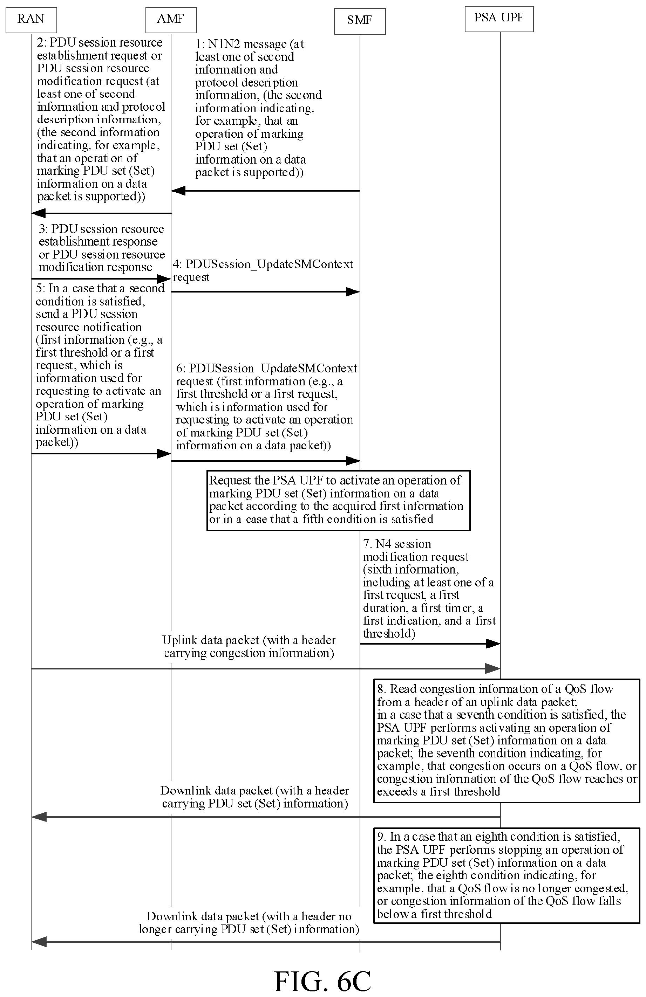

Please refer to FIG. 6C. Embodiment 6 of this application includes the following steps:
In step 1, an SMF sends an N1N2 message to an AMF, where the N1N2 message includes at least one of second information and protocol description information, where the second information is used for indicating at least one of the following: an operation of marking PDU Set information on a data packet in a QoS flow is supported or not supported; activating the operation of marking the PDU Set information on the data packet in the QoS flow is allowed or not allowed; PDU Set processing is allowed or not allowed; the data packet in the QoS flow has been marked with the PDU Set information or has not been marked with the PDU Set information.
In step 2, the AMF sends a PDU session resource establishment request or a PDU session resource modification request to an RAN. Optionally, the PDU session resource establishment request or the PDU session resource modification request includes at least one of the above second information and protocol description information.
In step 3, the RAN sends a PDU session resource establishment response or a PDU session resource modification response to the AMF.
In step 4, the AMF sends a PDU session update request (e.g., a PDUSession_UpdateSMContext request) to the SMF.
In step 5, an RAN sends a PDU session resource notification to the AMF. Optionally, the PDU session resource notification includes first information. The first information includes at least one of the following: a first request, a first duration, a first timer, a first indication, and a first threshold. The first information may be first information corresponding to a QoS flow.

Optionally, in a case that a second condition is satisfied, the RAN performs at least one of the following: sending a PDU session resource notification message to the AMF, and sending first information, where the PDU session resource notification message includes the first information.

Herein, the second condition includes at least one of the following:
the first communication device requires the PDU Set information corresponding to the data packet in the QoS flow;
the operation of marking the PDU Set information on the data packet in the QoS flow is supported;
activating the operation of marking the PDU Set information on the data packet in the QoS flow is allowed;
PDU Set processing in the QoS flow is allowed;
the data packet in the QoS flow is not marked with the PDU Set information;
the first communication device requires PDU Set information of the QoS flow;
the first communication device requires to activate or activates the PDU Set processing of the QoS flow;
congestion occurs in the QoS flow;
QoS flow congestion information reaches or exceeds the first threshold.

In step 6, the AMF sends a PDU session update request (e.g., a PDUSession_UpdateSMContext request) to the SMF. Optionally, the PDU session update request includes the above first information.

Subsequent steps are the same as those in Embodiment 4, and reference may be made to the description of steps 5 to 7 in Embodiment 1 for details, which will not be repeated here.

### Embodiment 7 of this application

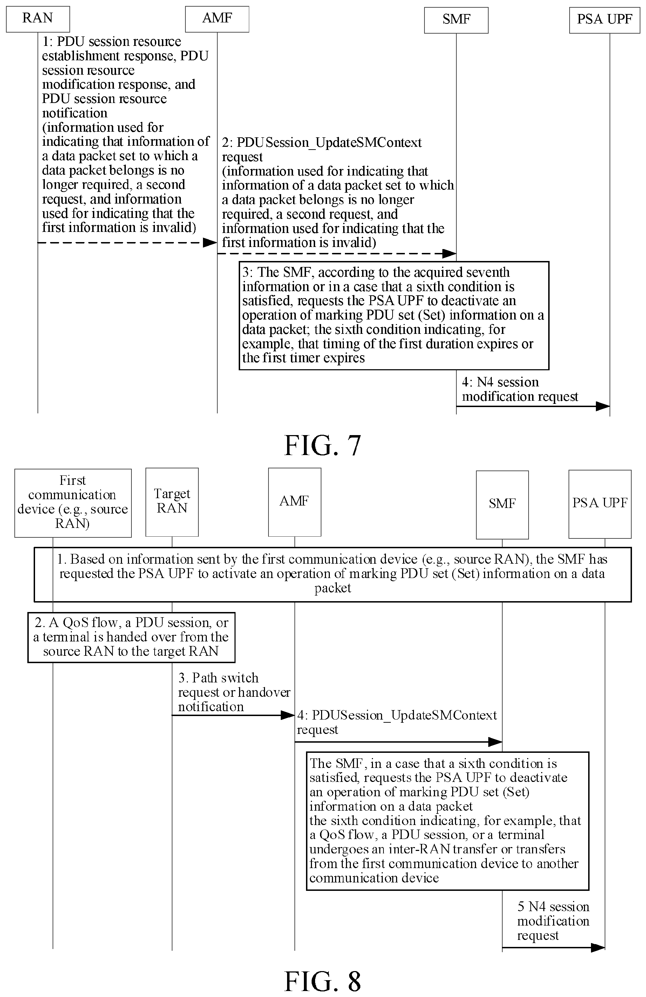

Please refer to FIG. 7. Embodiment 7 of this application includes the following steps:
In step 1, optionally, an RAN sends a PDU session resource establishment response, a PDU session resource modification response, or a PDU session resource notification to an AMF.

Optionally, the PDU session resource establishment response, the PDU session resource modification response, or the PDU session resource notification includes target information, and the target information includes at least one of the following: information used for indicating that information of a data packet set to which a data packet belongs is no longer required, a second request, and information used for indicating that the first information is invalid.

In step 2, optionally, the AMF sends a PDU session update request (e.g., a PDUSession_UpdateSMContext request) to an SMF. Optionally, the PDU session update request includes the above target information.

In step 3, the SMF, according to acquired seventh information or in a case that a sixth condition is satisfied, requests a PSA UPF to deactivate an operation of marking the PDU Set information on the data packet.

Optionally, the seventh information is used for indicating one of the following: a terminal undergoes an inter-RAN transfer or transfers from the first communication device to another communication device; a QoS flow undergoes an inter-RAN transfer or transfers from the first communication device to another communication device; a PDU session undergoes an inter-RAN transfer or transfers from the first communication device to another communication device.

Optionally, the sixth condition is, for example, timing according to the first duration expires or the first timer expires.

In step 4, the SMF sends an N4 session modification request to the PSA UPF, requesting to deactivate the operation of marking the PDU Set information on the data packet of the QoS flow. Optionally, the N4 session modification request not including an indication of activating the operation of marking the PDU Set information on the data packet may be used for indicating requesting to deactivate the operation of marking the PDU Set information on the data packet.

### Embodiment 8 of this application

Please refer to FIG. 8. Embodiment 7 of this application includes the following steps:
In step 1, based on information sent by a first communication device (e.g., a source RAN), an SMF has requested a PSA UPF to activate an operation of marking the PDU Set information on the data packet. Specifically, for the implementation of this step, reference may be made to the above embodiments, and details will not be described herein again.
In step 2: a QoS flow, a PDU session, or a terminal is handed over from the source RAN to a target RAN.
In step 3, the target RAN sends a path switch request or a handover notification to an AMF. Optionally, the path switch request or the handover notification includes an indication that the QoS flow or the terminal is handed over from the source RAN to the target RAN.
In step 4, the AMF sends a PDU session update request (e.g., a PDUSession_UpdateSMContext request) to the SMF. Optionally, the PDU session update request includes the above indication that the QoS flow or the terminal is handed over from the source RAN to the target RAN.

In this embodiment of this application, in a case that a sixth condition is satisfied, the SMF may request the PSA UPF to deactivate the operation of marking the PDU Set information on the data packet; the sixth condition is, for example: a terminal undergoes an inter-RAN transfer or transfers from the first communication device to another communication device; or, a QoS flow undergoes an inter-RAN transfer or transfers from the first communication device to another communication device; or, a PDU session undergoes an inter-RAN transfer or transfers from the first communication device to another communication device. The PDU session may be a PDU session of the terminal or a PDU session to which the QoS flow belongs, and the terminal is a terminal to which the PDU session or the QoS flow belongs.

In step 5, the SMF sends an N4 session modification request to the PSA UPF, requesting to deactivate the operation of marking the PDU Set information on the data packet. Optionally, the N4 session modification request not including an indication of activating the operation of marking the PDU Set information on the data packet may be used for indicating requesting to deactivate the operation of marking the PDU Set information on the data packet.

The processing methods provided in the embodiments of this application may be executed by processing apparatuses. In the embodiments of this application, the processing apparatuses will be described by taking, as an example, the processing apparatuses performing related processing of marking the PDU Set information on the data packet.

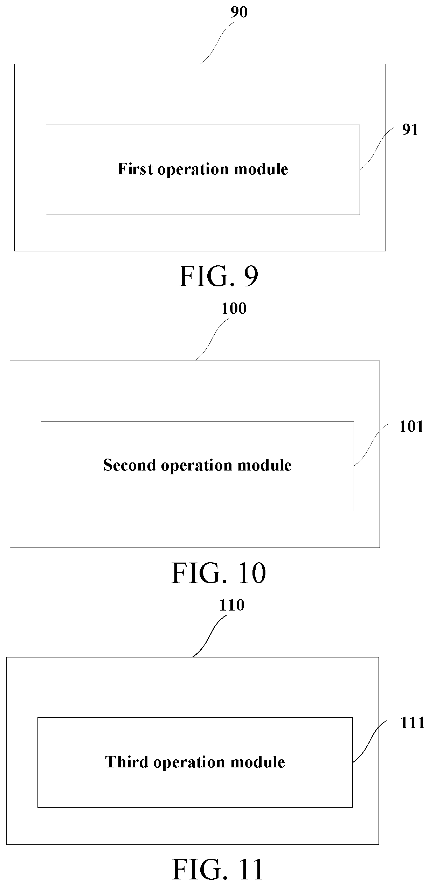

Please refer to FIG. 9. An embodiment of this application further provides a processing apparatus 90, including:
a first operation module 91, configured to perform a first operation, where the performing a first operation includes: sending, by a first communication device, first information to a second communication device,
where the first information includes at least one of the following: information used for indicating that PDU Set information corresponding to a data packet is required, a first request, a first duration, a first timer, a first indication, and a first threshold;
the first request is information used for requesting to activate an operation of marking the PDU Set information on the data packet;
the first duration is a duration of the operation of marking the PDU Set information on the data packet;
the first timer is a timer for the operation of marking the PDU Set information on the data packet;
the first indication is used for indicating to activate the operation of marking the PDU Set information on the data packet in a case that a first condition is satisfied; and the first condition includes at least one of the following: congestion information is acquired, and the congestion information reaches or exceeds the first threshold.

Optionally, the performing a first operation further includes sending, to the second communication device, one of the following: a validity duration of the first information, and a second timer,
where the second timer is a timer for validity of the first information.

Optionally, the first communication device sending first information to a second communication device includes:
sending, by the first communication device, the first information to the second communication device in a case that a second condition is satisfied,
where the second condition includes at least one of the following:
   the first communication device requires the PDU Set information corresponding to the data packet;
   the operation of marking the PDU Set information on the data packet is supported;
   activating the operation of marking the PDU Set information on the data packet is allowed;
   the PDU Set processing is allowed;
   the data packet is not marked with the PDU Set information;
   the first communication device requires the PDU Set information;
   the first communication device requires to activate or activates the PDU Set processing;
   congestion occurs; and
   the congestion information reaches or exceeds the first threshold.

Optionally, the requesting to activate the operation of marking the PDU Set information on the data packet is: requesting to activate an operation of marking PDU Set information on a data packet in a first object;
or, the activating the operation of marking the PDU Set information on the data packet is: activating the operation of marking the PDU Set information on the data packet in the first object;
or, the requiring the PDU Set information corresponding to the data packet indicates: requiring the PDU Set information corresponding to the data packet in the first object;
or, the operation of marking the PDU Set information on the data packet being supported indicates: the operation of marking the PDU Set information on the data packet in the first object being supported;
or, the allowing to activate the operation of marking the PDU Set information on the data packet indicates: allowing to activate the operation of marking the PDU Set information on the data packet in the first object;
or, the PDU Set processing being allowed indicates: PDU Set processing on the first object being allowed;
or, the data packet being not marked with the PDU Set information indicates: the data packet in the first object being not marked with the PDU Set information;
or, the first communication device requiring the PDU Set information indicates: the first communication device requiring PDU Set information of the first object;
or, the first communication device requiring to activate or activating the PDU Set processing indicates: the first communication device requiring to activate or activating PDU Set processing on the first object;
or, the congestion occurring indicates: congestion occurring on the first object;
or, the congestion information reaching or exceeding the first threshold indicates: congestion information of the first object reaching or exceeding the first threshold,
where
the first object includes at least one of the following: a QoS flow, a radio bearer, a data flow, a PDU session, and a terminal.

Optionally, the first operation module 91 is further configured to: send at least one of the following to the second communication device: information used for indicating that the PDU Set information corresponding to the data packet is no longer required, a second request, and information used for indicating that the first information is invalid,
where
the second request is information used for requesting to stop the operation of marking the PDU Set information on the data packet.

Optionally, the first operation module 91 is specifically configured to: send at least one of the following to the second communication device: information used for indicating that the PDU Set information corresponding to the data packet is no longer required, a second request, and information used for indicating that the first information is invalid, in a case that a third condition is satisfied,
where the third condition includes at least one of the following:
the first communication device no longer requires the PDU Set information corresponding to the data packet;
the first object is no longer congested;
congestion information of the first object falls below the first threshold or does not reach the first threshold,
where the first object includes at least one of the following: a QoS flow, a radio bearer, a data flow, a PDU session, and a terminal.

Optionally, the first operation module 91 is further configured to:
acquire target information;
determine, according to the target information, to perform or not to perform the operation of sending the first information to the second communication device;
   or,
the first operation module 91 is specifically configured to: acquire target information; perform, according to the target information, the operation of sending the first information to the second communication device,
where
the target information includes at least one of the following: second information, third information, and protocol description information,
where
the second information is used for indicating at least one of the following:
   the operation of marking the PDU Set information on the data packet is supported or not supported;
   the requesting to activate the operation of marking the PDU Set information on the data packet is allowed or not allowed;
   the PDU Set processing is allowed or not allowed;
   the data packet has been marked with the PDU Set information or has not been marked with the PDU Set information;
   where
   the third information is used for indicating at least one of the following:
      congestion occurs; and
      the congestion information reaches or exceeds the first threshold.
      Optionally, acquiring the second information includes: receiving the second information from a core network device;
         or,
      acquiring the protocol description information includes: receiving the protocol description information from at least one of the core network device and a terminal.
      Optionally, the operation of marking the PDU Set information on the data packet being supported or not supported indicates: the operation of marking the PDU Set information on the data packet in the first object being supported or not supported;
      or, the allowing or not allowing to request to activate the operation of marking the PDU Set information on the data packet indicates: allowing or not allowing to request to activate the operation of marking the PDU Set information on the data packet in the first object;
      or, the PDU Set processing being allowed or not allowed indicates: PDU Set processing on the first object being allowed or not allowed;
      or, the data packet having been marked with the PDU Set information or having not been marked with the PDU Set information indicates: the data packet in the first object having been marked with the PDU Set information or having not been marked with the PDU Set information;
      or, the congestion occurring indicates: congestion occurring on the first object;
      or, the congestion information reaching or exceeding the first threshold indicates: congestion information of the first object reaching or exceeding the first threshold,
      where the first object includes at least one of the following: a QoS flow, a radio bearer, a data flow, a PDU session, and a terminal.

In an implementation, the PDU Set processing is PDU Set processing other than PDU Set QoS processing.

In an implementation, the PDU Set processing being allowed or not allowed may indicate: allowing or not allowing the first communication device to perform PDU Set processing.

In an implementation, PDU Set processing on the first object being allowed or not allowed may indicate: allowing or not allowing the first communication device to perform PDU Set processing on the first object.

Optionally, the PDU Set processing being allowed or not allowed may include at least one of the following: downlink PDU Set processing being allowed or not allowed; uplink PDU Set processing being allowed or not allowed.

Optionally, the PDU Set processing is PDU Set processing other than PDU Set QoS processing. The PDU Set QoS processing may be an abbreviation for one of the following: processing based on a PDU Set QoS parameter, and QoS processing based on a PDU Set. The PDU Set processing may be an abbreviation for processing based on a PDU Set.

It is easy to understand that, in an implementation, the PDU Set processing does not include at least one of the following: processing based on PDU Set QoS, and applying PDU Set QoS; in another implementation, the PDU Set processing includes at least one of the following: processing based on PDU Set QoS, and applying PDU Set QoS.

By sending the first information to the second communication device, in a case that the first communication device requires PDU Set information and a core network device does not mark PDU Set information, the operation of marking the PDU Set information on the data packet by the core network device may be activated, thereby enabling the first communication device to obtain PDU Set information. In this way, the embodiments of this application provide a mechanism for how to trigger activation of an operation of marking data packet set information (e.g., PDU Set information) on a data packet, improving the flexibility of marking PDU Set information. Therefore, the embodiments of this application improve the reliability of communication. For example, in a case that congestion occurs in an RAN, an operation of marking the PDU Set information on the data packet is activated, and after acquiring the PDU Set information, packet dropping may be performed based on the PDU Set information to alleviate pressure on network resources.

The processing apparatus provided in this embodiment of this application can implement the various processes implemented in the method embodiment in FIG. 2 and achieve the same technical effect, which will not be repeated here to avoid repetition.

Please refer to FIG. 10. An embodiment of this application further provides a processing apparatus 100, including:
a second operation module 101, configured to perform a second operation, where the performing a second operation includes at least one of the following:
sending, to a first communication device, at least one of second information and protocol description information, where the second information is used for indicating at least one of the following: an operation of marking PDU Set information on a data packet is supported or not supported; requesting to activate the operation of marking the PDU Set information on the data packet is allowed or not allowed; PDU Set processing is allowed or not allowed; the data packet has been marked with the PDU Set information or has not been marked with the PDU Set information;
requesting a third communication device to activate the operation of marking the PDU Set information on the data packet, or requesting the third communication device to deactivate the operation of marking the PDU Set information on the data packet;
performing a first sub-operation;
performing a second sub-operation,
where
performing the first sub-operation includes at least one of the following:
   acquiring fourth information, including at least one of the following: first information, a validity duration of the first information, and protocol description information;
   performing, according to the fourth information, at least one of the following:
      accepting or rejecting the first information;
      sending an activation result to the first communication device;
      storing the first information;
      starting a first timing, where the first timing is a timing according to a first duration, and the first duration is a duration of the operation of marking the PDU Set information on the data packet, or starting timing of a first timer, where the first timer is a timer for the operation of marking the PDU Set information on the data packet;
      starting a second timing, where the second timing is a timing according to a validity duration of the first information, or starting timing of a second timer, where the second timer is a timer for validity of the first information;
      requesting the third communication device to activate the operation of marking the PDU Set information on the data packet;
      sending sixth information to the third communication device, where the sixth information includes at least one of the following: a first request, a first duration, a first timer, a first indication, and a first threshold;
      where
      performing the second sub-operation includes at least one of the following:
         acquiring fifth information, including at least one of the following: information used for indicating that the PDU Set information corresponding to the data packet is no longer required; a second request; information used for indicating that the first information is invalid; seventh information, where the seventh information is used for indicating one of the following: a terminal undergoes an inter-RAN transfer or transfers from the first communication device to another communication device, a PDU session QoS flow undergoes an inter-RAN transfer or transfers from the first communication device to another communication device, and a QoS flow undergoes an inter-RAN transfer or transfers from the first communication device to another communication device;
         performing, according to the fifth information, at least one of the following:
            deleting the first information;
            accepting or rejecting the second request in a case that the fifth information includes the second request;
            sending a deactivation result to the first communication device;
            stopping a first timing, where the first timing is a timing according to a first duration; or stopping timing of a first timer, where the first timer is a timer for the operation of marking the PDU Set information on the data packet;
            stopping a second timing, where the second timing is a timing according to a validity duration of the first information; or stopping timing of a second timer, where the second timer is a timer for validity of the first information;
            requesting the third communication device to deactivate the operation of marking the PDU Set information on the data packet;
            sending, to the third communication device, information used for indicating that the sixth information is invalid;
            where
            the first information includes at least one of the following: information used for indicating that PDU Set information corresponding to a data packet is required, a first request, a first duration, a first timer, a first indication, and a first threshold;
            the first request is information used for requesting to activate the operation of marking the PDU Set information on the data packet;
            the second request is information used for requesting to stop the operation of marking the PDU Set information on the data packet;
            the first duration is a duration of the operation of marking the PDU Set information on the data packet;
            the first timer is a timer for the operation of marking the PDU Set information on the data packet;
            the second timer is a timer for validity of the first information;
            the first indication is used for indicating to activate the operation of marking the PDU Set information on the data packet in a case that a first condition is satisfied; and the satisfying a first condition includes at least one of the following: congestion information is acquired, and the congestion information reaches or exceeds the first threshold.

Optionally, in a case that the first sub-operation includes sending the sixth information to the third communication device, the first sub-operation further includes: sending, to the third communication device, one of the following: a validity duration of the sixth information, and a third timer,
where the third timer is a timer for validity of the sixth information.

Optionally, the sending, to a first communication device, at least one of second information and protocol description information includes: determining to send at least one of the second information and the protocol description information to the first communication device according to at least one of an operator policy, protocol description information, the third communication device supporting the operation of marking the PDU Set information on the data packet, the operation of marking the PDU Set information on the data packet being supported, requesting to activate the operation of marking the PDU Set information on the data packet being allowed, the PDU Set processing being allowed, the data packet being not marked with the PDU Set information, a PDU Set QoS parameter not existing, and first information.

Optionally, the second operation module 101 is specifically configured to send the second information to the first communication device in a case that a fourth condition is satisfied,
where the fourth condition includes at least one of the following:
protocol description information corresponding to the first object exists, where the first object includes at least one of the following: a QoS flow, a radio bearer, a data flow, a PDU session, and a terminal;
the third communication device supports the operation of marking the PDU Set information on the data packet;
the operation of marking the PDU Set information on the data packet is supported (e.g., the operation of marking the PDU Set information on the data packet in the first object is supported);
the requesting to activate the operation of marking the PDU Set information on the data packet is allowed (e.g., requesting to activate the operation of marking the PDU Set information on the data packet in the first object is allowed;
the PDU Set processing is allowed (e.g., PDU Set processing on the first object is allowed);
the data packet is not marked with the PDU Set information (e.g., the data packet in the first object is not marked with the PDU Set information);
a PDU Set QoS parameter (e.g., a DL PDU Set QoS parameter does not exist (e.g., a DL PDU Set QoS parameter of the first object does not exist) (e.g., a PDU Set QoS parameter of the first object does not exist); the first information is acquired;
the second information is acquired.

Optionally, the requesting the third communication device to activate the operation of marking the PDU Set information on the data packet includes: requesting the third communication device to activate the operation of marking the PDU Set information on the data packet in a case that a fifth condition is satisfied,
where the fifth condition includes at least one of the following:
the protocol description information exists;
the operation of marking the PDU Set information on the data packet is supported;
the requesting to activate the operation of marking the PDU Set information on the data packet is allowed;
the PDU Set processing is allowed;
the data packet is not marked with the PDU Set information;
the first information is acquired;
the first timing does not expire, or the first timer does not expire, where the first timing is a timing according to a first duration; the first timer is a timer for the operation of marking the PDU Set information on the data packet;
the first information is valid or is within a validity duration of the first information; and
the second timing does not expire, or the second timer does not expire, where the second timing is a timing according to the validity duration of the first information, and the second timer is a timer for validity of the first information.

Optionally, the operation of marking the PDU Set information on the data packet indicates: an operation of marking PDU Set information on a data packet in a first object;
or, the protocol description information existing indicates: the protocol description information corresponding to the first object existing;
or, the operation of marking the PDU Set information on the data packet being supported indicates: the operation of marking the PDU Set information on the data packet in the first object being supported;
or, the requesting to activate the operation of marking the PDU Set information on the data packet being allowed indicates: requesting to activate the operation of marking the PDU Set information on the data packet in the first object being allowed;
or, the PDU Set processing being allowed indicates: PDU Set processing on the first object being allowed;
or, the data packet being not marked with the PDU Set information indicates: the data packet in the first object being not marked with the PDU Set information;
or, the first information indicates: first information corresponding to the first object;
or, the second timer not expiring indicates: a second timer corresponding to the first object not expiring;
or, the first timing or the first timer not expiring indicates: a first timing or a first timer corresponding to the first object not expiring,
where
the first object includes at least one of the following: a QoS flow, a radio bearer, a data flow, a PDU session, and a terminal.

Optionally, requesting the third communication device to deactivate the operation of marking the PDU Set information on the data packet, and/or deleting the first information includes: requesting the third communication device to deactivate the operation of marking the PDU Set information on the data packet, and/or deleting the first information in a case that a sixth condition is satisfied,
where the sixth condition includes at least one of the following:
the operation of marking the PDU Set information on the data packet is requested to be activated by a source RAN device of a handover;
a terminal undergoes an inter-RAN transfer or transfers from the first communication device to another communication device;
a QoS flow undergoes an inter-RAN transfer or transfers from the first communication device to another communication device;
a PDU session undergoes an inter-RAN transfer or transfers from the first communication device to another communication device;
the first timing expires, or the first timer expires, where the first timing is a timing according to a first duration; the first timer is a timer for the operation of marking the PDU Set information on the data packet;
the first information is invalid or is deleted;
the second timing expires, or the second timer expires, where the second timing is a timing according to a validity duration of the first information, the second timer is a timer for validity of the first information;
one of the following is obtained: a second request, information used for indicating that the PDU Set information corresponding to the data packet is no longer required, and information used for indicating that the first information is invalid.

Optionally, the operation of marking the PDU Set information on the data packet indicates: an operation of marking PDU Set information on a data packet in a first object;
or, the second request indicates: a second request corresponding to the first object;
or, the information used for indicating that the PDU Set information corresponding to the data packet is no longer required indicates: information used for indicating that the PDU Set information corresponding to the data packet in the first object is no longer required;
or, the first information being invalid indicates: first information corresponding to the first object being invalid;
or, the first timing expiring indicates: a first timing corresponding to the first object expiring;
or, the first timer expiring indicates: a first timer corresponding to the first object expiring;
or, the second timing expiring indicates: a second timing corresponding to the first object expiring;
or, the second timer expiring indicates: a second timer corresponding to the first object expiring,
where
the first object includes at least one of the following: a QoS flow, a radio bearer, a data flow, a PDU session, and a terminal.

In an implementation, the PDU Set processing is PDU Set processing other than PDU Set QoS processing.

In an implementation, the PDU Set processing being allowed or not allowed may indicate: allowing or not allowing the first communication device to perform PDU Set processing.

In an implementation, PDU Set processing on the first object being allowed or not allowed may indicate: allowing or not allowing the first communication device to perform PDU Set processing on the first object.

Optionally, the PDU Set processing being allowed or not allowed may include at least one of the following: downlink PDU Set processing being allowed or not allowed; uplink PDU Set processing being allowed or not allowed.

Optionally, the PDU Set processing is PDU Set processing other than PDU Set QoS processing. The PDU Set QoS processing may be an abbreviation for one of the following: processing based on a PDU Set QoS parameter, and QoS processing based on a PDU Set. The PDU Set processing may be an abbreviation for processing based on a PDU Set.

It is easy to understand that, in an implementation, the PDU Set processing does not include at least one of the following: processing based on PDU Set QoS, and applying PDU Set QoS; in another implementation, the PDU Set processing includes at least one of the following: processing based on PDU Set QoS, and applying PDU Set QoS.

Through the embodiments of this application, in a case that the first communication device requires PDU Set information and a core network device does not mark PDU Set information, the operation of marking the PDU Set information on the data packet by the core network device may be activated, thereby enabling the first communication device to obtain PDU Set information. In this way, the embodiments of this application provide a mechanism for how to trigger activation of an operation of marking data packet set information (e.g., PDU Set information) on a data packet, improving the flexibility of marking PDU Set information. Therefore, the embodiments of this application improve the reliability of communication and optimize the communication process.

The processing apparatus provided in this embodiment of this application can implement the various processes implemented in the method embodiment in FIG. 3 and achieve the same technical effect, which will not be repeated here to avoid repetition.

Please refer to FIG. 11. An embodiment of this application further provides a processing apparatus 110, including:
a third operation module 111, configured to perform a third operation, where the performing a third operation includes:
acquiring eighth information, where the eighth information includes at least one of sixth information and congestion information, where the sixth information includes at least one of the following: a first request, a first duration, a first timer, a first indication, and a first threshold;
performing, according to the eighth information, at least one of the following:
   activating an operation of marking the PDU Set information on the data packet or deactivating the operation of marking the PDU Set information on the data packet;
   accepting or rejecting the sixth information;
   starting a first timing, where the first timing is a timing according to a first duration, or starting timing of a first timer, where the first timer is a timer for the operation of marking the PDU Set information on the data packet;
   starting a third timing, where the third timing is a timing according to a validity duration of the sixth information, or starting timing of a third timer, where the third timer is a timer for validity of the sixth information,
   where
   the first request is information used for requesting to activate the operation of marking the PDU Set information on the data packet;
   the first duration is a duration of the operation of marking the PDU Set information on the data packet;
   the first indication is used for indicating to activate the operation of marking the PDU Set information on the data packet in a case that a first condition is satisfied; and the first condition includes at least one of the following: congestion information is acquired, and the congestion information reaches or exceeds the first threshold.

Optionally, the third operation module 111 is further configured to: acquire information used for indicating that the sixth information is invalid;
perform, according to the information used for indicating that the sixth information is invalid, at least one of the following:
deleting the stored sixth information;
stopping the first timing, or stopping the first timer, where the first timing is a timing according to a first duration;
stopping the third timing, or stopping the third timer; and
deactivating the operation of marking the PDU Set information on the data packet.

Optionally, acquiring sixth information includes: receiving the sixth information from a second communication device;
or
acquiring congestion information includes: acquiring the congestion information from a received data packet, or receiving the congestion information from a second communication device.

Optionally, the third operation module 111 is specifically configured to perform activating the operation of marking the PDU Set information on the data packet in a case that a seventh condition is satisfied,
where the seventh condition includes at least one of the following:
protocol description information exists, or protocol description information of a data flow corresponding to the data packet exists;
the operation of marking the PDU Set on the data packet is supported;
the data packet is not marked with the PDU Set information;
the sixth information is acquired, where the sixth information includes at least one of the following: a first request, a first duration, a first timer, a first indication, and a first threshold;
the first timing does not expire, or the first timer does not expire, where the first timing is a timing according to a first duration; the first timer is a timer for the operation of marking the PDU Set information on the data packet;
the sixth information is valid or is within a validity duration of the sixth information;
the third timing does not expire, or the third timer does not expire, where the third timing is a timing according to the validity duration of the sixth information, and the third timer is a timer for validity of the sixth information;
congestion occurs; and
the congestion information reaches or exceeds the first threshold.

Optionally, the operation of marking the PDU Set information on the data packet indicates: an operation of marking PDU Set information on a data packet in a first object;
or, the protocol description information existing indicates: the protocol description information corresponding to the first object existing;
or, the operation of marking the PDU Set on the data packet being supported or not supported indicates: the operation of marking the PDU Set information on the data packet in the first object being supported;
or, the data packet being not marked with the PDU Set information indicates: the data packet in the first object being not marked with the PDU Set information;
or, the first request indicates: a first request corresponding to the first object;
or, the first duration indicates: a first duration corresponding to the first object;
or, the first indication indicates: a first indication corresponding to the first object;
or, the first threshold indicates: a first threshold corresponding to the first object;
or, the congestion occurring indicates: congestion occurring on the first object;
or, the congestion information reaching or exceeding the first threshold indicates: congestion information of the first object reaching or exceeding the first threshold;
or, the first timing not expiring indicates: a first timing corresponding to the first object not expiring;
or, the first timer not expiring indicates: a first timer corresponding to the first object not expiring;
or, the third timing not expiring indicates: a third timing corresponding to the first object not expiring;
or, the third timer not expiring indicates: a third timer corresponding to the first object not expiring.

Optionally, the third operation module 111 is specifically configured to perform stopping the operation of marking the PDU Set information on the data packet in a case that an eighth condition is satisfied,
where the eighth condition includes at least one of the following:
a second request is acquired;
the first timing expires, or the first timer expires, where the first timing is a timing according to a first duration, and the first timer is a timer for the operation of marking the PDU Set information on the data packet;
the sixth information is invalid or is deleted;
the third timing expires, or the third timer expires, where the third timing is a timing according to a validity duration of the sixth information, and the third timer is a timer for validity of the sixth information;
an indication that the sixth information is invalid is obtained;
congestion information is no longer received or congestion no longer occurs;
congestion information falls below the first threshold.

Optionally, stopping the operation of marking the PDU Set information on the data packet indicates: stopping an operation of marking PDU Set information on a data packet in a first object;
the second request indicates: a second request corresponding to the first object;
the first timing expiring indicates: a first timing corresponding to the first object expiring;
the first timer expiring indicates: a first timer corresponding to the first object expiring;
the third timing expiring indicates: a third timing corresponding to the first object expiring;
the third timer expiring indicates: a third timer corresponding to the first object expiring;
the sixth information indicates: sixth information corresponding to the first object;
the congestion information no longer being received or the congestion no longer occurring indicates: congestion information corresponding to the first object no longer being received or the first object no longer being congested;
the congestion information falling below the first threshold indicates: congestion information corresponding to the first object falling below the first threshold.

Optionally, in a case that the eighth information includes the sixth information, the eighth information further includes at least one of the following: a validity duration of the sixth information and a third timer.

Optionally, the operation of marking the PDU Set information on the data packet includes: an operation of marking PDU Set information on a data packet in a first object;
where the first object includes at least one of the following: a QoS flow, a radio bearer, a data flow, a PDU session, and a terminal.

Through the embodiments of this application, in a case that the first communication device requires PDU Set information and a core network device does not mark PDU Set information, the operation of marking the PDU Set information on the data packet by the core network device may be activated, thereby enabling the first communication device to obtain PDU Set information. In this way, the embodiments of this application provide a mechanism for how to trigger activation of an operation of marking data packet set information (e.g., PDU Set information) on a data packet, improving the flexibility of marking PDU Set information. Therefore, the embodiments of this application improve the reliability of communication and optimize the communication process.

The processing apparatus provided in this embodiment of this application can implement the various processes implemented in the method embodiment in FIG. 4 and achieve the same technical effect, which will not be repeated here to avoid repetition.

In this embodiment of this application, the processing apparatus may be an electronic device, such as an electronic device with an operating system, or a component within an electronic device, such as an integrated circuit or chip. The electronic device may be a terminal or any other device except a terminal. Exemplarily, the terminal may include but is not limited to the type of the terminal 11 listed above, and the other device may be a server, a network attached storage (Network Attached Storage, NAS) device or the like, which is not specifically limited in this embodiment of this application.

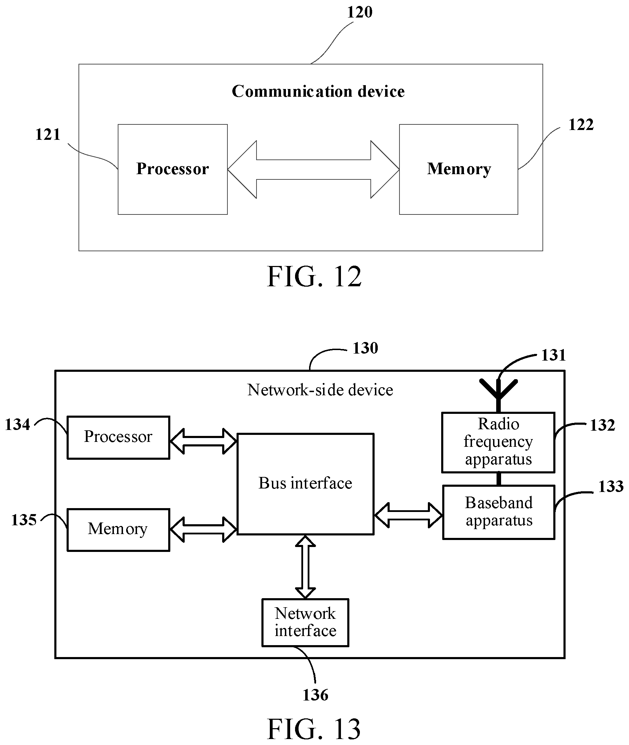

As shown in FIG. 12, an embodiment of this application further provides a communication device 120, including a processor 121 and a memory 122, where the memory 122 stores a program or an instruction executable on the processor 121. For example, in a case that the communication device 120 is the first communication device, when the program or the instruction is executed by the processor 121, the steps in the foregoing processing method performed by the first communication device are implemented, and the same technical effect can be achieved. In a case that the communication device 120 is the second communication device, when the program or the instruction is executed by the processor 121, steps of the foregoing processing method performed by the second communication device are implemented, and the same technical effect can be achieved. In a case that the communication device 120 is the third communication device, when the program or the instruction is executed by the processor 121, the steps in the foregoing processing method performed by the third communication device are implemented, and the same technical effect can be achieved. To avoid repetition, details will not be described herein again.

An embodiment of this application further provides a network-side device, including a processor and a communication interface, where the communication interface is coupled to the processor, and the processor is configured to execute a program or an instruction to implement the steps of the methods shown in FIG. 2 to FIG. 4. This network-side device embodiment corresponds to the above network-side device method embodiment. The various implementation processes and modes in the above method embodiment are applicable to this network-side device embodiment, and can achieve the same technical effect.

Specifically, an embodiment of this application further provides a network-side device. As shown in FIG. 13, the network-side device 130 includes: an antenna 131, a radio frequency apparatus 132, a baseband apparatus 133, a processor 134, and a memory 135. The antenna 131 is connected to the radio frequency apparatus 132. In an uplink direction, the radio frequency apparatus 132 receives information through the antenna 131 and sends the received information to the baseband apparatus 133 for processing. In a downlink direction, the baseband apparatus 133 processes the information to be sent and sends it to the radio frequency apparatus 132. The radio frequency apparatus 132 processes the received information and sends it out through the antenna 131.

The method executed by the network-side device in the above embodiments can be implemented in the baseband apparatus 133. The baseband apparatus 133 includes a baseband processor.

The baseband apparatus 133 may include, for example, at least one baseband board. Multiple chips are provided on the baseband board. Referring to FIG. 13, one chip, for example, is the baseband processor connected to the memory 135 through a bus interface and configured to call a program in the memory 135 and perform operations on the network device illustrated in the method embodiment.

The network-side device may further include a network interface 136. The interface is, for example, a common public radio interface (Common Public Radio Interface, CPRI).

Specifically, the network-side device 130 according to this embodiment of this application further includes an instruction or a program stored in the memory 135 and executable on the processor 134. The processor 134 calls the instruction or the program in the memory 135 to execute the method executed by each module shown in FIG. 9, and can achieve the same technical effect, which will not be repeated here to avoid repetition.

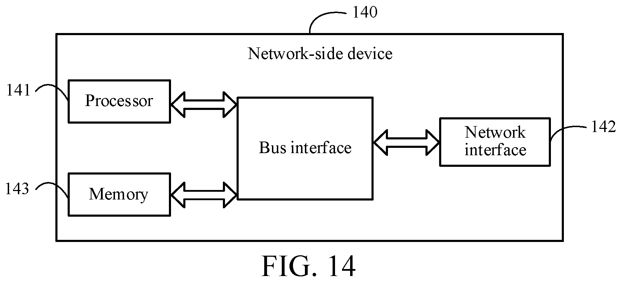

Specifically, an embodiment of this application further provides a network-side device. As shown in FIG. 14, the network-side device 140 includes: a processor 141, a network interface 142, and a memory 143. The network interface 142 may be, for example, a common public radio interface (Common Public Radio Interface, CPRI).

Specifically, the network-side device 140 according to this embodiment of this application further includes an instruction or a program stored in the memory 143 and executable on the processor 141. The processor 141 calls the instruction or the program in the memory 143 to execute the method executed by each module shown in FIG. 10 or FIG. 11, and can achieve the same technical effect, which will not be repeated here to avoid repetition.

An embodiment of this application further provides a readable storage medium. A program or an instruction is stored on the readable storage medium. The program or the instruction, when executed by a processor, implements the various processes of the processing methods, and can achieve the same technical effect, which will not be repeated here to avoid repetition.

The processor is a processor in the terminal in the above embodiment. The readable storage medium may include a computer-readable storage medium, such as a Read-Only Memory (ROM), a Random Access Memory (RAM), a magnetic disk, an optical disc, or the like. In some examples, the readable storage medium may be a non-transitory readable storage medium.

An embodiment of this application further provides a chip. The chip includes a processor and a communication interface, where the communication interface is coupled to the processor, and the processor is configured to execute a program or an instruction to implement the processes of the processing methods, and can achieve the same technical effect, which will not be repeated here to avoid repetition.

It is to be understood that the chip provided in this embodiment of this application may also be referred to as system level chip, system chip, chip system, or system on chip.

An embodiment of this application further provides a computer program/program product. The computer program/program product is stored in a storage medium. The computer program/program product, when executed by at least one processor, implements the various processes of the processing methods, and can achieve the same technical effect, which will not be repeated here to avoid repetition.

An embodiment of this application further provides a wireless communication system, including a first communication device, a second communication device, and a third communication device, where the first communication device may be configured to perform the steps of the method performed at the first communication device side, the second communication device may be configured to perform the steps of the method performed at the second communication device side, and the third communication device may be configured to perform the steps of the method performed at the third communication device side.

The terms "include", "comprise" or any other variation thereof are intended to cover non-exclusive inclusion, so that a process, method, item or device that includes a series of elements not only includes those elements, but also other elements that are not explicitly listed, or also include elements inherent in such a process, method, item or device. Without further limitations, the element limited by the statement "including a..." does not preclude the presence of another identical element in a process, method, object or apparatus that includes that element. In addition, the scope of the methods and apparatuses in the embodiments of this application is not limited to performing functions in the order shown or discussed, but may also include performing functions in a substantially simultaneous manner or in the opposite order according to the involved functions. For example, the described methods may be executed in a different order from the described ones, and various steps may also be added, omitted or combined. In addition, features described with reference to certain examples may be combined in other examples.

According to the descriptions of the foregoing implementations, a person skilled in the art may clearly understand that the methods in the foregoing embodiments may be implemented by using a computer software product and a necessary universal hardware platform, or may certainly be implemented by using hardware. The computer software product is stored in a storage medium (e.g., a ROM, a RAM, a magnetic disk, or an optical disc), and includes several instructions, to enable a terminal or a network-side device to perform the methods described in the embodiments of this application.

The embodiments of this application have been described above with reference to the drawings. However, this application is not limited to the specific implementations above. The specific implementations above are only exemplary rather than restrictive. Under the inspiration of this application, those skilled in the art may make many implementations without departing from the essence and the scope of protection of this application, which, however, still fall within the scope of protection of this application.

## Claims

1. A processing method, comprising:
performing, by a first communication device, a first operation,
wherein the performing a first operation comprises: sending, by the first communication device, first information to a second communication device,
wherein the first information comprises at least one of the following: information used for indicating that PDU Set information corresponding to a data packet is required, a first request, a first duration, a first timer, a first indication, and a first threshold;
the first request is information used for requesting to activate an operation of marking the PDU Set information on the data packet;
the first duration is a duration of the operation of marking the PDU Set information on the data packet;
the first timer is a timer for the operation of marking the PDU Set information on the data packet;
the first indication is used for indicating to activate the operation of marking the PDU Set information on the data packet in a case that a first condition is satisfied; and the first condition comprises at least one of the following: congestion information is acquired, and the congestion information reaches or exceeds the first threshold.

2. The method according to claim 1, wherein the performing a first operation further comprises sending, to the second communication device, one of the following: a validity duration of the first information, and a second timer,
wherein the second timer is a timer for validity of the first information.

3. The method according to claim 1, wherein the sending, by the first communication device, first information to a second communication device comprises:
sending, by the first communication device, the first information to the second communication device in a case that a second condition is satisfied,
wherein the second condition comprises at least one of the following:
the first communication device requires the PDU Set information corresponding to the data packet;
the operation of marking the PDU Set information on the data packet is supported;
activating the operation of marking the PDU Set information on the data packet is allowed;
the PDU Set processing is allowed;
the data packet is not marked with the PDU Set information;
the first communication device requires the PDU Set information;
the first communication device requires to activate or activates the PDU Set processing;
congestion occurs; and
the congestion information reaches or exceeds the first threshold.

4. The method according to claim 3, wherein
the requesting to activate the operation of marking the PDU Set information on the data packet is: requesting to activate an operation of marking PDU Set information on a data packet in a first object;
or, the activating the operation of marking the PDU Set information on the data packet is: activating the operation of marking the PDU Set information on the data packet in the first object;
or, the requiring the PDU Set information corresponding to the data packet indicates: requiring the PDU Set information corresponding to the data packet in the first object;
or, the operation of marking the PDU Set information on the data packet being supported indicates: the operation of marking the PDU Set information on the data packet in the first object being supported;
or, the allowing to activate the operation of marking the PDU Set information on the data packet indicates: allowing to activate the operation of marking the PDU Set information on the data packet in the first object;
or, the PDU Set processing being allowed indicates: PDU Set processing on the first object being allowed;
or, the data packet being not marked with the PDU Set information indicates: the data packet in the first object being not marked with the PDU Set information;
or, the first communication device requiring the PDU Set information indicates: the first communication device requiring PDU Set information of the first object;
or, the first communication device requiring to activate or activating the PDU Set processing indicates: the first communication device requiring to activate or activating PDU Set processing on the first object;
or, the congestion occurring indicates: congestion occurring on the first object;
or, the congestion information reaching or exceeding the first threshold indicates: congestion information of the first object reaching or exceeding the first threshold,
wherein
the first object comprises at least one of the following: a QoS flow, a radio bearer, a data flow, a PDU session, and a terminal.

5. The method according to any one of claims 1 to 4, wherein after the first communication device performs the first operation, the method further comprises:
sending, by the first communication device, at least one of the following to the second communication device: information used for indicating that the PDU Set information corresponding to the data packet is no longer required, a second request, and information used for indicating that the first information is invalid,
wherein
the second request is information used for requesting to stop the operation of marking the PDU Set information on the data packet.

6. The method according to claim 5, wherein the sending, by the first communication device, at least one of the following to the second communication device: information used for indicating that the PDU Set information corresponding to the data packet is no longer required, a second request, and information used for indicating that the first information is invalid, comprises:
sending, by the first communication device, at least one of the following to the second communication device: information used for indicating that the PDU Set information corresponding to the data packet is no longer required, a second request, and information used for indicating that the first information is invalid, in a case that a third condition is satisfied,
wherein the third condition comprises at least one of the following:
the first communication device no longer requires the PDU Set information corresponding to the data packet;
the first object is no longer congested;
congestion information of the first object falls below the first threshold or does not reach the first threshold,
wherein the first object comprises at least one of the following: a QoS flow, a radio bearer, a data flow, a PDU session, and a terminal.

7. The method according to any one of claims 1 to 6, wherein before the first communication device sends the first information to the second communication device, the method further comprises:
acquiring, by the first communication device, target information;
determining, by the first communication device according to the target information, to perform or not to perform the operation of sending the first information to the second communication device;
or,
the sending, by the first communication device, first information to a second communication device comprises:
acquiring, by the first communication device, target information;
performing, by the first communication device according to the target information, the operation of sending the first information to the second communication device,
wherein
the target information comprises at least one of the following: second information, third information, and protocol description information,
wherein
the second information is used for indicating at least one of the following:
the operation of marking the PDU Set information on the data packet is supported or not supported;
the requesting to activate the operation of marking the PDU Set information on the data packet is allowed or not allowed;
the PDU Set processing is allowed or not allowed;
the data packet has been marked with the PDU Set information or has not been marked with the PDU Set information; wherein
the third information is used for indicating at least one of the following:
congestion occurs; and
the congestion information reaches or exceeds the first threshold.

8. The method according to claim 7, wherein
the acquiring, by the first communication device, the second information comprises: receiving, by the first communication device, the second information from a core network device;
or,
the acquiring, by the first communication device, the protocol description information comprises: receiving, by the first communication device, the protocol description information from at least one of the core network device and a terminal.

9. The method according to claim 7 or 8, wherein the operation of marking the PDU Set information on the data packet being supported or not supported indicates: the operation of marking the PDU Set information on the data packet in the first object being supported or not supported;
or, the allowing or not allowing to request to activate the operation of marking the PDU Set information on the data packet indicates: allowing or not allowing to request to activate the operation of marking the PDU Set information on the data packet in the first object;
or, the PDU Set processing being allowed or not allowed indicates: PDU Set processing on the first object being allowed or not allowed;
or, the data packet having been marked with the PDU Set information or having not been marked with the PDU Set information indicates: the data packet in the first object having been marked with the PDU Set information or having not been marked with the PDU Set information;
or, the congestion occurring indicates: congestion occurring on the first object;
or, the congestion information reaching or exceeding the first threshold indicates: congestion information of the first object reaching or exceeding the first threshold,
wherein the first object comprises at least one of the following: a QoS flow, a radio bearer, a data flow, a PDU session, and a terminal.

10. The method according to claim 3, 7, or 9, wherein
the PDU Set processing is PDU Set processing other than PDU Set QoS processing.

11. A processing method, comprising:
performing, by a second communication device, a second operation, wherein the performing a second operation comprises at least one of the following:
sending, to a first communication device, at least one of second information and protocol description information, wherein the second information is used for indicating at least one of the following: an operation of marking PDU Set information on a data packet is supported or not supported; requesting to activate the operation of marking the PDU Set information on the data packet is allowed or not allowed; PDU Set processing is allowed or not allowed; the data packet has been marked with the PDU Set information or has not been marked with the PDU Set information;
requesting a third communication device to activate the operation of marking the PDU Set information on the data packet, or requesting the third communication device to deactivate the operation of marking the PDU Set information on the data packet;
performing a first sub-operation;
performing a second sub-operation,
wherein performing the first sub-operation comprises at least one of the following:
acquiring fourth information, comprising at least one of the following: first information, a validity duration of the first information, and protocol description information;
performing, according to the fourth information, at least one of the following:
accepting or rejecting the first information;
sending an activation result to the first communication device;
storing the first information;
starting a first timing, wherein the first timing is a timing according to a first duration, and the first duration is a duration of the operation of marking the PDU Set information on the data packet, or starting timing of a first timer, wherein the first timer is a timer for the operation of marking the PDU Set information on the data packet;
starting a second timing, wherein the second timing is a timing according to a validity duration of the first information, or starting timing of a second timer, wherein the second timer is a timer for validity of the first information;
requesting the third communication device to activate the operation of marking the PDU Set information on the data packet;
sending sixth information to the third communication device, wherein the sixth information comprises at least one of the following: a first request, a first duration, a first timer, a first indication, and a first threshold;
wherein
performing the second sub-operation comprises at least one of the following:
acquiring fifth information, comprising at least one of the following: information used for indicating that the PDU Set information corresponding to the data packet is no longer required; a second request; information used for indicating that the first information is invalid; seventh information, wherein the seventh information is used for indicating one of the following: a terminal undergoes an inter-RAN transfer or transfers from the first communication device to another communication device, a PDU session QoS flow undergoes an inter-RAN transfer or transfers from the first communication device to another communication device, and a QoS flow undergoes an inter-RAN transfer or transfers from the first communication device to another communication device;
performing, according to the fifth information, at least one of the following:
deleting the first information;
accepting or rejecting the second request in a case that the fifth information comprises the second request;
sending a deactivation result to the first communication device;
stopping a first timing, wherein the first timing is a timing according to a first duration; or stopping timing of a first timer, wherein the first timer is a timer for the operation of marking the PDU Set information on the data packet;
stopping a second timing, wherein the second timing is a timing according to a validity duration of the first information; or stopping timing of a second timer, wherein the second timer is a timer for validity of the first information;
requesting the third communication device to deactivate the operation of marking the PDU Set information on the data packet;
sending, to the third communication device, information used for indicating that the sixth information is invalid;
wherein
the first information comprises at least one of the following: information used for indicating that PDU Set information corresponding to a data packet is required, a first request, a first duration, a first timer, a first indication, and a first threshold;
the first request is information used for requesting to activate the operation of marking the PDU Set information on the data packet;
the second request is information used for requesting to stop the operation of marking the PDU Set information on the data packet;
the first duration is a duration of the operation of marking the PDU Set information on the data packet;
the first timer is a timer for the operation of marking the PDU Set information on the data packet;
the second timer is a timer for validity of the first information;
the first indication is used for indicating to activate the operation of marking the PDU Set information on the data packet in a case that a first condition is satisfied; and the satisfying a first condition comprises at least one of the following: congestion information is acquired, and the congestion information reaches or exceeds the first threshold.

12. The method according to claim 11, wherein in a case that the first sub-operation comprises sending the sixth information to the third communication device, the first sub-operation further comprises: sending, to the third communication device, one of the following: a validity duration of the sixth information, and a third timer,
wherein the third timer is a timer for validity of the sixth information.

13. The method according to claim 11, wherein the sending, to a first communication device, at least one of second information and protocol description information comprises: determining to send at least one of the second information and the protocol description information to the first communication device according to at least one of an operator policy, protocol description information, the third communication device supporting the operation of marking the PDU Set information on the data packet, the operation of marking the PDU Set information on the data packet being supported, requesting to activate the operation of marking the PDU Set information on the data packet being allowed, the PDU Set processing being allowed, the data packet being not marked with the PDU Set information, a PDU Set QoS parameter not existing, and first information;
or,
sending the second information to the first communication device in a case that a fourth condition is satisfied, wherein the fourth condition comprises at least one of the following:
protocol description information corresponding to a first object exists, wherein the first object comprises at least one of the following: a QoS flow, a radio bearer, a data flow, a PDU session, and a terminal;
the third communication device supports the operation of marking the PDU Set information on the data packet;
the operation of marking the PDU Set information on the data packet is supported;
the requesting to activate the operation of marking the PDU Set information on the data packet is allowed;
the PDU Set processing is allowed;
the data packet is not marked with the PDU Set information;
the PDU Set QoS parameter does not exist;
the first information is acquired;
the second information is acquired.

14. The method according to any one of claims 11 to 13, wherein the requesting the third communication device to activate the operation of marking the PDU Set information on the data packet comprises: requesting the third communication device to activate the operation of marking the PDU Set information on the data packet in a case that a fifth condition is satisfied,
wherein the fifth condition comprises at least one of the following:
the protocol description information exists;
the operation of marking the PDU Set information on the data packet is supported;
the requesting to activate the operation of marking the PDU Set information on the data packet is allowed;
the PDU Set processing is allowed;
the data packet is not marked with the PDU Set information;
the first information is acquired;
the first timing does not expire, or the first timer does not expire, wherein the first timing is a timing according to a first duration; the first timer is a timer for the operation of marking the PDU Set information on the data packet;
the first information is valid or is within a validity duration of the first information; and
the second timing does not expire, or the second timer does not expire, wherein the second timing is a timing according to the validity duration of the first information, and the second timer is a timer for validity of the first information.

15. The method according to claim 14, wherein
the operation of marking the PDU Set information on the data packet indicates: an operation of marking PDU Set information on a data packet in a first object;
or, the protocol description information existing indicates: the protocol description information corresponding to the first object existing;
or, the operation of marking the PDU Set information on the data packet being supported indicates: the operation of marking the PDU Set information on the data packet in the first object being supported;
or, the requesting to activate the operation of marking the PDU Set information on the data packet being allowed indicates: requesting to activate the operation of marking the PDU Set information on the data packet in the first object being allowed;
or, the PDU Set processing being allowed indicates: PDU Set processing on the first object being allowed;
or, the data packet being not marked with the PDU Set information indicates: the data packet in the first object being not marked with the PDU Set information;
or, the first information indicates: first information corresponding to the first object;
or, the second timer not expiring indicates: a second timer corresponding to the first object not expiring;
or, the first timing or the first timer not expiring indicates: a first timing or a first timer corresponding to the first object not expiring,
wherein
the first object comprises at least one of the following: a QoS flow, a radio bearer, a data flow, a PDU session, and a terminal.

16. The method according to any one of claims 11 to 15, wherein requesting the third communication device to deactivate the operation of marking the PDU Set information on the data packet, and/or deleting the first information comprises: requesting the third communication device to deactivate the operation of marking the PDU Set information on the data packet, and/or deleting the first information in a case that a sixth condition is satisfied,
wherein the sixth condition comprises at least one of the following:
the operation of marking the PDU Set information on the data packet is requested to be activated by a source RAN device of a handover;
a terminal undergoes an inter-RAN transfer or transfers from the first communication device to another communication device;
a QoS flow undergoes an inter-RAN transfer or transfers from the first communication device to another communication device;
a PDU session undergoes an inter-RAN transfer or transfers from the first communication device to another communication device;
the first timing expires, or the first timer expires, wherein the first timing is a timing according to a first duration; the first timer is a timer for the operation of marking the PDU Set information on the data packet;
the first information is invalid or is deleted;
the second timing expires, or the second timer expires, wherein the second timing is a timing according to a validity duration of the first information, the second timer is a timer for validity of the first information;
one of the following is obtained: a second request, information used for indicating that the PDU Set information corresponding to the data packet is no longer required, and information used for indicating that the first information is invalid.

17. The method according to claim 16, wherein
the operation of marking the PDU Set information on the data packet indicates: an operation of marking PDU Set information on a data packet in a first object;
or, the second request indicates: a second request corresponding to the first object;
or, the information used for indicating that the PDU Set information corresponding to the data packet is no longer required indicates: information used for indicating that the PDU Set information corresponding to the data packet in the first object is no longer required;
or, the first information being invalid indicates: first information corresponding to the first object being invalid;
or, the first timing expiring indicates: a first timing corresponding to the first object expiring;
or, the first timer expiring indicates: a first timer corresponding to the first object expiring;
or, the second timing expiring indicates: a second timing corresponding to the first object expiring;
or, the second timer expiring indicates: a second timer corresponding to the first object expiring,
wherein
the first object comprises at least one of the following: a QoS flow, a radio bearer, a data flow, a PDU session, and a terminal.

18. The method according to any one of claims 11 to 17, wherein the operation of marking the PDU Set information on the data packet comprises: an operation of marking PDU Set information on a data packet in a first object,
wherein the first object comprises at least one of the following: a QoS flow, a radio bearer, a data flow, a PDU session, and a terminal.

19. The method according to any one of claims 13 to 15, wherein
the PDU Set processing is PDU Set processing other than PDU Set QoS processing.

20. A processing method, comprising:
performing, by a third communication device, a third operation, wherein the performing a third operation comprises:
acquiring eighth information, wherein the eighth information comprises at least one of sixth information and congestion information, wherein the sixth information comprises at least one of the following: a first request, a first duration, a first timer, a first indication, and a first threshold;
performing, according to the eighth information, at least one of the following:
activating an operation of marking the PDU Set information on the data packet or deactivating the operation of marking the PDU Set information on the data packet;
accepting or rejecting the sixth information;
starting a first timing, wherein the first timing is a timing according to a first duration, or starting timing of a first timer, wherein the first timer is a timer for the operation of marking the PDU Set information on the data packet;
starting a third timing, wherein the third timing is a timing according to a validity duration of the sixth information, or starting timing of a third timer, wherein the third timer is a timer for validity of the sixth information,
wherein
the first request is information used for requesting to activate the operation of marking the PDU Set information on the data packet;
the first duration is a duration of the operation of marking the PDU Set information on the data packet;
the first indication is used for indicating to activate the operation of marking the PDU Set information on the data packet in a case that a first condition is satisfied; and the first condition comprises at least one of the following: congestion information is acquired, and the congestion information reaches or exceeds the first threshold.

21. The method according to claim 20, wherein, after the third communication device performs the third operation, the method further comprises:
acquiring, by the third communication device, information used for indicating that the sixth information is invalid;
performing, by the third communication device according to the information used for indicating that the sixth information is invalid, at least one of the following:
deleting the stored sixth information;
stopping the first timing, or stopping the first timer, wherein the first timing is a timing according to a first duration;
stopping the third timing, or stopping the third timer; and
deactivating the operation of marking the PDU Set information on the data packet.

22. The method according to claim 20 or 21, wherein
acquiring sixth information comprises: receiving the sixth information from a second communication device;
or
acquiring congestion information comprises: acquiring the congestion information from a received data packet, or receiving the congestion information from a second communication device.

23. The method according to any one of claims 20 to 22, wherein the third communication device performs activating the operation of marking the PDU Set information on the data packet in a case that a seventh condition is satisfied,
wherein the seventh condition comprises at least one of the following:
protocol description information exists, or protocol description information of a data flow corresponding to the data packet exists;
the operation of marking the PDU Set on the data packet is supported;
the data packet is not marked with the PDU Set information;
the sixth information is acquired, wherein the sixth information comprises at least one of the following: a first request, a first duration, a first timer, a first indication, and a first threshold;
the first timing does not expire, or the first timer does not expire, wherein the first timing is a timing according to a first duration; the first timer is a timer for the operation of marking the PDU Set information on the data packet;
the sixth information is valid or is within a validity duration of the sixth information;
the third timing does not expire, or the third timer does not expire, wherein the third timing is a timing according to the validity duration of the sixth information, and the third timer is a timer for validity of the sixth information;
congestion occurs; and
the congestion information reaches or exceeds the first threshold.

24. The method according to claim 23, wherein
the operation of marking the PDU Set information on the data packet indicates: an operation of marking PDU Set information on a data packet in a first object;
or, the protocol description information existing indicates: the protocol description information corresponding to the first object existing;
or, the operation of marking the PDU Set on the data packet being supported or not supported indicates: the operation of marking the PDU Set information on the data packet in the first object being supported;
or, the data packet being not marked with the PDU Set information indicates: the data packet in the first object being not marked with the PDU Set information;
or, the first request indicates: a first request corresponding to the first object;
or, the first duration indicates: a first duration corresponding to the first object;
or, the first indication indicates: a first indication corresponding to the first object;
or, the first threshold indicates: a first threshold corresponding to the first object;
or, the congestion occurring indicates: congestion occurring on the first object;
or, the congestion information reaching or exceeding the first threshold indicates: congestion information of the first object reaching or exceeding the first threshold;
or, the first timing not expiring indicates: a first timing corresponding to the first object not expiring;
or, the first timer not expiring indicates: a first timer corresponding to the first object not expiring;
or, the third timing not expiring indicates: a third timing corresponding to the first object not expiring;
or, the third timer not expiring indicates: a third timer corresponding to the first object not expiring.

25. The method according to any one of claims 20 to 24, wherein the third communication device performs stopping the operation of marking the PDU Set information on the data packet in a case that an eighth condition is satisfied,
wherein the eighth condition comprises at least one of the following:
a second request is acquired;
the first timing expires, or the first timer expires, wherein the first timing is a timing according to a first duration, and the first timer is a timer for the operation of marking the PDU Set information on the data packet;
the sixth information is invalid or is deleted;
the third timing expires, or the third timer expires, wherein the third timing is a timing according to a validity duration of the sixth information, and the third timer is a timer for validity of the sixth information;
an indication that the sixth information is invalid is obtained;
congestion information is no longer received or congestion no longer occurs;
congestion information falls below the first threshold.

26. The method according to claim 25, wherein stopping the operation of marking the PDU Set information on the data packet indicates: stopping an operation of marking PDU Set information on a data packet in a first object;
the second request indicates: a second request corresponding to the first object;
the first timing expiring indicates: a first timing corresponding to the first object expiring;
the first timer expiring indicates: a first timer corresponding to the first object expiring;
the third timing expiring indicates: a third timing corresponding to the first object expiring;
the third timer expiring indicates: a third timer corresponding to the first object expiring;
the sixth information indicates: sixth information corresponding to the first object;
the congestion information no longer being received or the congestion no longer occurring indicates: congestion information corresponding to the first object no longer being received or the first object no longer being congested;
the congestion information falling below the first threshold indicates: congestion information corresponding to the first object falling below the first threshold.

27. The method according to any one of claims 20 to 26, wherein in a case that the eighth information comprises the sixth information, the eighth information further comprises at least one of the following: a validity duration of the sixth information and a third timer.

28. The method according to claim 20, wherein the operation of marking the PDU Set information on the data packet comprises: an operation of marking PDU Set information on a data packet in a first object,
wherein the first object comprises at least one of the following: a QoS flow, a radio bearer, a data flow, a PDU session, and a terminal.

29. A processing apparatus, comprising:
a first operation module, configured to perform a first operation, wherein the performing a first operation comprises: sending, by a first communication device, first information to a second communication device,
wherein the first information comprises at least one of the following: information used for indicating that PDU Set information corresponding to a data packet is required, a first request, a first duration, a first timer, a first indication, and a first threshold;
the first request is information used for requesting to activate an operation of marking the PDU Set information on the data packet;
the first duration is a duration of the operation of marking the PDU Set information on the data packet;
the first timer is a timer for the operation of marking the PDU Set information on the data packet;
the first indication is used for indicating to activate the operation of marking the PDU Set information on the data packet in a case that a first condition is satisfied; and the first condition comprises at least one of the following: congestion information is acquired, and the congestion information reaches or exceeds the first threshold.

30. A processing apparatus, comprising:
a second operation module, configured to perform a second operation, wherein the performing a second operation comprises at least one of the following:
sending, to a first communication device, at least one of second information and protocol description information, wherein the second information is used for indicating at least one of the following: an operation of marking PDU Set information on a data packet is supported or not supported; requesting to activate the operation of marking the PDU Set information on the data packet is allowed or not allowed; PDU Set processing is allowed or not allowed; the data packet has been marked with the PDU Set information or has not been marked with the PDU Set information;
requesting a third communication device to activate the operation of marking the PDU Set information on the data packet, or requesting the third communication device to deactivate the operation of marking the PDU Set information on the data packet;
performing a first sub-operation;
performing a second sub-operation,
wherein
performing the first sub-operation comprises at least one of the following:
acquiring fourth information, comprising at least one of the following: first information, a validity duration of the first information, and protocol description information;
performing, according to the fourth information, at least one of the following:
accepting or rejecting the first information;
sending an activation result to the first communication device;
storing the first information;
starting a first timing, wherein the first timing is a timing according to a first duration, and the first duration is a duration of the operation of marking the PDU Set information on the data packet, or starting timing of a first timer, wherein the first timer is a timer for the operation of marking the PDU Set information on the data packet;
starting a second timing, wherein the second timing is a timing according to a validity duration of the first information, or starting timing of a second timer, wherein the second timer is a timer for validity of the first information;
requesting the third communication device to activate the operation of marking the PDU Set information on the data packet;
sending sixth information to the third communication device, wherein the sixth information comprises at least one of the following: a first request, a first duration, a first timer, a first indication, and a first threshold;
wherein
performing the second sub-operation comprises at least one of the following:
acquiring fifth information, comprising at least one of the following: information used for indicating that the PDU Set information corresponding to the data packet is no longer required; a second request; information used for indicating that the first information is invalid; seventh information, wherein the seventh information is used for indicating one of the following: a terminal undergoes an inter-RAN transfer or transfers from the first communication device to another communication device, a PDU session QoS flow undergoes an inter-RAN transfer or transfers from the first communication device to another communication device, and a QoS flow undergoes an inter-RAN transfer or transfers from the first communication device to another communication device;
performing, according to the fifth information, at least one of the following:
deleting the first information;
accepting or rejecting the second request in a case that the fifth information comprises the second request;
sending a deactivation result to the first communication device;
stopping a first timing, wherein the first timing is a timing according to a first duration; or stopping timing of a first timer, wherein the first timer is a timer for the operation of marking the PDU Set information on the data packet;
stopping a second timing, wherein the second timing is a timing according to a validity duration of the first information; or stopping timing of a second timer, wherein the second timer is a timer for validity of the first information;
requesting the third communication device to deactivate the operation of marking the PDU Set information on the data packet;
sending, to the third communication device, information used for indicating that the sixth information is invalid;
wherein
the first information comprises at least one of the following: information used for indicating that PDU Set information corresponding to a data packet is required, a first request, a first duration, a first timer, a first indication, and a first threshold;
the first request is information used for requesting to activate the operation of marking the PDU Set information on the data packet;
the second request is information used for requesting to stop the operation of marking the PDU Set information on the data packet;
the first duration is a duration of the operation of marking the PDU Set information on the data packet;
the first timer is a timer for the operation of marking the PDU Set information on the data packet;
the second timer is a timer for validity of the first information;
the first indication is used for indicating to activate the operation of marking the PDU Set information on the data packet in a case that a first condition is satisfied; and the satisfying a first condition comprises at least one of the following: congestion information is acquired, and the congestion information reaches or exceeds the first threshold.

31. A processing apparatus, comprising:
a third operation module, configured to perform a third operation, wherein the performing a third operation comprises:
acquiring eighth information, wherein the eighth information comprises at least one of sixth information and congestion information, wherein the sixth information comprises at least one of the following: a first request, a first duration, a first timer, a first indication, and a first threshold;
performing, according to the eighth information, at least one of the following:
activating an operation of marking the PDU Set information on the data packet or deactivating the operation of marking the PDU Set information on the data packet;
accepting or rejecting the sixth information;
starting a first timing, wherein the first timing is a timing according to a first duration, or starting timing of a first timer, wherein the first timer is a timer for the operation of marking the PDU Set information on the data packet;
starting a third timing, wherein the third timing is a timing according to a validity duration of the sixth information, or starting timing of a third timer, wherein the third timer is a timer for validity of the sixth information,
wherein
the first request is information used for requesting to activate the operation of marking the PDU Set information on the data packet;
the first duration is a duration of the operation of marking the PDU Set information on the data packet;
the first indication is used for indicating to activate the operation of marking the PDU Set information on the data packet in a case that a first condition is satisfied; and the first condition comprises at least one of the following: congestion information is acquired, and the congestion information reaches or exceeds the first threshold.

32. A communication device, comprising a processor and a memory, wherein the memory stores a program or an instruction executable on the processor, wherein the program or the instruction, when executed by the processor, implements the steps of the processing method according to any one of claims 1 to 10, or the program or the instruction, when executed by the processor, implements the steps of the processing method according to any one of claims 11 to 19, or the program or the instruction, when executed by the processor, implements the steps of the processing method according to any one of claims 20 to 28.

33. A readable storage medium, wherein the readable storage medium stores a program or an instruction, wherein the program or the instruction, when executed by the processor, implements the steps of the processing method according to any one of claims 1 to 10, or the program or the instruction, when executed by the processor, implements the steps of the processing method according to any one of claims 11 to 19, or the program or the instruction, when executed by the processor, implements the steps of the processing method according to any one of claims 20 to 28.
